# EUROPÄISCHE PATENTSCHRIFT

(11) **EP 1 927 151 B1**
(45) Veröffentlichungstag und Bekanntmachung des Hinweises auf die Patenterteilung: **17.08.2011**
(21) Anmeldenummer: 06791927.4
(22) Anmeldetag: 08.09.2006
(51) Int. Cl.: H01M 8/12, C08J 5/22, C08K 3/32, C08L 79/04

(54) **VERFAHREN ZUR KONDITIONIERUNG VON MEMBRAN-ELEKTRODEN-EINHEITEN FÜR BRENNSTOFFZELLEN**
METHOD FOR CONDITIONING MEMBRANE-ELECTRODE-UNITS FOR FUEL CELLS
PROCEDE DE CONDITIONNEMENT D'UNITES MEMBRANE-ELECTRODES DESTINEES A DES PILES A COMBUSTIBLE

(30) Priorität: 10.09.2005 DE 102005043127
(43) Veröffentlichungstag der Anmeldung: 04.06.2008
(73) Patentinhaber: BASF Fuel Cell Research GmbH, 67056 Ludwigshafen (DE)
(72) Erfinder: UENSAL, Oemer, 55128 Mainz (DE); KIEFER, Joachim, 66679 Losheim am See (DE); KUNDLER, Isabel, 61462 Königstein (DE); WEBER, Mathias, 65428 Rüsselsheim (DE); PADBERG, Christoph Dl., 65193 Wiesbaden (DE); SCHMIDT, Thomas, 65456 Mörfelden-Walldorf (DE); BAURMEISTER, Jochen, 65817 Eppstein (DE); CALUNDANN, Gordon, North Plainfield, NJ 07060 (US); HOPPES, Glen, 60489 Frankfurt (DE)
(74) Vertreter: Luderschmidt, Schüler & Partner
(86) Internationale Anmeldenummer: PCT/EP2006/008759
(87) Internationale Veröffentlichungsnummer: WO 2007/028626

(56) Entgegenhaltungen:
- WO-A-2005/063852
- WO-A-2006/008075
- WO-A2-01/18894

## Beschreibung

Die vorliegende Erfindung betrifft ein Verfahren zur Konditionierung von Membran-Elektroden-Einheiten für Brennstoffzellen, bei denen die Leistung der eingesetzten Membran-Elektroden-Einheiten erhöht und somit die Effizienz der resultierenden Polymerelektrolytmembran-Brennstoffzellen verbessert werden kann.

Eine Brennstoffzelle enthält üblicherweise einen Elektrolyten und zwei durch den Elektrolyten getrennte Elektroden, bei denen einer der beiden Elektroden ein Brennstoff, wie Wasserstoffgas oder ein Methanol-Wasser-Gemisch, und der anderen Elektrode ein Oxidationsmittel, wie Sauerstoffgas oder Luft, zugeführt wird. Die durch die resultierende Brennstoffoxidation entstehende chemische Energie wird dabei direkt in elektrische Energie umgewandelt.

Eine Forderung an den Elektrolyten ist, daß dieser für Wasserstoffionen, d.h. Protonen, nicht aber für die vorstehend genannten Brennstoffe durchlässig ist.

Eine Brennstoffzelle weist in der Regel mehrere Einzelzellen sogenannte MEE's (Membran-Elektroden-Einheit) auf, die jeweils einen Elektrolyten und zwei durch den Elektrolyten getrennte Elektroden enthalten.

Als Elektrolyt für die Brennstoffzelle kommen Feststoffe wie Polymerelektrolytmembranen oder Flüssigkeiten wie Phosphorsäure zur Anwendung. In jüngster Zeit haben Polymerelektrolytmembranen als Elektrolyte für Brennstoffzellen Aufmerksamkeit erregt.

Polymerelektrolytmembranen mit Komplexen aus basischen Polymeren und starken Säuren sind beispielsweise aus WO96/13872 bekannt. Zu deren Herstellung wird ein basisches Polymer, beispielsweise Polybenzimidazol, mit einer starken Säure, wie Phosphorsäure, behandelt.

Des weiteren sind (siehe US-A-4,017,664) auch Brennstoffzellen bekannt, deren Membran anorganische Trägermaterialien, wie beispielsweise Glasfasergewebe oder Glasfaservliese, umfassen, die mit Phosphorsäure getränkt sind.

Bei den im Stand der Technik bekannten basischen Polymermembranen wird die - zum Erzielen der erforderlichen Protonenleitfähigkeit - eingesetzte Mineralsäure (meist konzentrierte Phosphorsäure) üblicherweise nach der Formgebung der Polyazolfolie beigefügt. Das Polymer dient dabei als Träger für den Elektrolyten bestehend aus der hochkonzentrierten Phosphorsäure. Die Polymermembran erfüllt dabei weitere wesentliche Funktionen, insbesondere muss sie eine hohe mechanische Stabilität aufweisen und als Separator für die beiden eingangs genannten Brennstoffe dienen.

Wesentliche Vorteile einer solchen Phosphorsäure dotierten Membran ist die Tatsache, dass eine Brennstoffzelle, bei der eine derartige Polymerelektrolytmembran eingesetzt wird, bei Temperaturen oberhalb 100°C ohne eine sonst notwendige Befeuchtung der Brennstoffe betrieben werden kann. Dies liegt in der Eigenschaft der Phosphorsäure begründet die Protonen ohne zusätzliches Wasser mittels des sog. Grotthus Mechanismus transportieren zu können (K.-D. Kreuer, Chem. Mater. 1996, 8, 610-641).

Durch die Möglichkeit des Betriebes bei Temperaturen oberhalb 100°C ergeben sich weitere Vorteile für das Brennstoffzellensystem. Zum Einen wird die Empfindlichkeit des Pt-Katalysators gegenüber Gasverunreinigungen, insbesondere CO, stark verringert. CO entsteht als Nebenprodukt bei der Reformierung des wasserstoffreichen Gases aus Kohlenstoffhaltigen Verbindungen, wie z.B. Erdgas, Methanol oder Benzin oder auch als Zwischenprodukt bei der direkten Oxidation von Methanol. Typischerweise muss der CO-Gehalt des Brennstoffes bei Temperaturen <100°C kleiner als 100 ppm sein. Bei Temperaturen im Bereich 150-200° können jedoch auch 10000 ppm CO oder mehr toleriert werden (N. J. Bjerrum et. al. Journal of Applied Electrochemistry, 2001,31, 773-779). Dies führt zu wesentlichen Vereinfachungen des vorgeschalteten Reformierungsprozesses und somit zu Kostensenkungen des gesamten Brennstoffzellensystems.

Die Leistung einer Membran-Elektroden-Einheit hergestellt mit solchen Membranen ist in WO 01/18894 und in Electrochimica Acta, Band 41, 1996, 193-197 beschrieben und liegen bei einer Platinbeladung von 0,5 mg/cm² (Anode) und 2 mg/cm² (Kathode) kleiner als 0,2 A/cm² bei einer Spannung von 0,6 V. Bei Verwendung von Luft anstelle von Sauerstoff sinkt dieser Wert auf kleiner als 0,1 A/cm² ab.

Ein großer Vorteil von Brennstoffzellen ist die Tatsache, dass bei der elektrochemischen Reaktion die Energie des Brennstoffes direkt in elektrische Energie und Wärme umgewandelt wird. Als Reaktionsprodukt entsteht dabei an der Kathode Wasser. Als Nebenprodukt bei der elektrochemischen Reaktion entsteht also Wärme. Für Anwendungen bei denen nur der Strom zum Antrieb von Elektromotoren genutzt wird, wie z.B. für Automobilanwendungen, oder als vielfältiger Ersatz von Batteriesystemen muss ein Teil der bei der Reaktion entstehenden Wärme abgeführt werden, um ein Überhitzen des Systems zu vermeiden. Für die Kühlung werden dann zusätzliche, Energie verbrauchende Geräte notwendig, die den elektrischen Gesamt-Wirkungsgrad der Brennstoffzelle weiter verringern. Für stationäre Anwendungen wie zur zentralen oder dezentralen Erzeugung von Strom und Wärme lässt sich die Wärme effizient durch vorhandene Technologien wie z.B. Wärmetauscher nutzen. Zur Steigerung der Effizienz werden dabei hohe Temperaturen angestrebt. Liegt die Betriebstemperatur oberhalb 100°C und ist die Temperaturdifferenz zwischen der Umgebungstemperatur und der Betriebstemperatur groß, so wird es möglich das Brennstoffzellensystem effizienter zu kühlen beziehungsweise kleine Kühlflächen zu verwenden und auf zusätzliche Geräte zu verzichten im Vergleich zu Brennstoffzellen, die aufgrund der Membranbefeuchtung bei unter 100°C betrieben werden müssen.

Die zuvor dargelegten Membran-Elektroden-Einheiten weisen bereits ein gutes Eigenschaftsprofil aus, wobei jedoch die Leistungsfähigkeit, beispielsweise die Stromdichte bei hohen Spannungen von bekannten Membran-Elektroden-Einheiten noch zu verbessern ist.

Eine weitere Aufgabe bestand darin eine Membran-Elektroden-Einheit bereitzustellen, die eine hohe Leistungsfähigkeit, insbesondere eine hohe Stromdichte bzw. bei einer hohen Spannung eine hohe Stromdichte, über einen weiten Temperaturbereich zeigt

Darüber hinaus muss die erfindungsgemäße Membran-Elektroden-Einheit eine hohe Haltbarkeit, insbesondere eine lange Lebensdauer bei den geforderten hohen Leisturigsdichten aufweisen.

Eine permanente Aufgabe bei allen Membran-Elektroden-Einheiten besteht darin, die Mengen an Katalysatoren zu reduzieren um die Herstellkosten zu vermindern, ohne dass dabei die Leistungsfähigkeit signifikant vermindert wird. Vorteilhafterweise soll die Membran-Elektroden-Einheit bei geringem Gasfluß und/oder bei geringem Überdruck mit einer hohen Leistungsdichte betrieben werden können.

Der vorliegenden Erfindung liegt daher die Aufgabe zugrunde, Membran-Elektroden-Einheit bereitzustellen, die einerseits die zuvor dargelegten Kriterien erfüllen und andererseits eine verbesserte Leistung aufweisen.

Gegenstand der vorliegenden Erfindung ist ein Verfahren zur Konditionierung einer Membran-Elektroden-Einheit wobei eine Membran-Elektroden-Einheit enthaltend
A) mindestens eine Polymerelektrolyt-Matrix enthaltend mindestens eine Sauerstoffsäure des Phosphors und/oder Schwefels und mindestens ein Polymer mit mindestens einem Heteroatom ausgewählt aus der Gruppe Stickstoff, Sauerstoff und/oder Schwefel,
B) mindestens zwei Elektroden,
nach der Laminierung der Polymerelektrolyt-Matrix und der Elektroden in einem Temperaturbereich von 60°C bis 300°C konditioniert wird.

Die mittels des erfindungsgemäßen Verfahrens resultierende Membran-Elektroden-Einheit zeigt eine verbesserte Leistung gegenüber Membran-Elektroden-Einheiten welche nicht mit dem erfindungsgemäßen Verfahren konditioniert worden sind.

Die erfindungsgemäße Konditionierung erfolgt bei Temperaturen von 60°C bis 300°C, vorzugsweise von 80°C bis 300°C, insbesondere von 100°C bis 290°C, besonders bevorzugt von 110°C bis 280°C, ganz besonders bevorzugt von 140°C bis 275°C.

Die Mindestdauer der erfindungsgemäßen Konditionierung beträgt mindestens 30 Sekunden, vorzugsweise mindestens 1 Minute, insbesondere mindestens 2 Minuten.

Die Dauer der Konditionierung beträgt maximal 24 Stunden. Es ist möglich die Konditionierung auch länger als 24 Stunden zu betreiben, wobei allerdings keine wesentliche Verbesserung der Performance zu beobachten ist.

Als wirtschaftlich sinnvolle Behandlungsdauer wird eine Behandlungsdauer von 30 Sekunden bis zu 24 Stunden, vorzugsweise 1 Minute bis 20 Stunden, insbesondere 2 Minuten bis 20 Stunden, angesehen.

Durch die vorstehend beschrieben Konditionierung wird der Wassergehalt der Polymerelektrolyt-Matrix in der Membran-Elektroden Einheit von ca. 26 Gew.% deutlich reduziert. Es hat sich gezeigt, dass die Verbesserung der Performance einsetzt, wenn der Wassergehalt auf 20 Gew.-% und weniger gesenkt wird. Nach der Konditionierung beträgt der Wassergehalt der Polymerelektrolyt-Matrix in der Membran-Elektroden Einheit somit weniger als 20 Gew.%.

Insofern die erfindungsgemäßen Konditionierung der Membran-Elektroden-Einheit in der eingebauten Zelle erfolgt, ist es von Vorteil, die Zelle und damit auch die Membran-Elektroden-Einheit mit mindestens einem gasförmigen Medium gespült. Auf diese Art und Weise wird ggf. anwesendes Wasser ausgetragen und der oben beschriebene Restwassergehalt erhalten.

Bei einer Konditionierung in der Zelle, erfolgt diese im Wesentlichen unter stromlosen Bedingungen, d.h. dass während der Konditionierung max. ein Strom entsprechend 10 mA/cm² bei 800 mV gezogen wird. Somit kann die Konditionierung auch im Rahmen eines kontrollierten Anfahrens der Zelle durchgeführt werden.

Als gasförmige Medien eignen sich alle gasförmigen Medien, vorzugsweise Luft, Sauerstoff, Stickstoff und/oder Edelgase wie Argon, Helium. Bevorzugt werden gasförmige Medien eingesetzt, welche kein Wasserstoffgas enthalten oder unter den gewählten Bedingungen entwickeln und somit elektrochemische Reaktionen eingehen.

Insofern die erfindungsgemäßen Konditionierung der Membran-Elektroden-Einheit im nicht-eingebauten Zustand erfolgt, kann auf die Spülung mit einem gasförmigen Medium auch verzichtet werden.

Die erfindungsgemäß konditionierten Membran-Elektroden-Einheiten enthalten mindestens eine Polymerelektrolyt-Matrix, welche wiederum mindestens ein Polymer mit mindestens einem Heteroatom ausgewählt aus der Gruppe Stickstoff, Sauerstoff und/oder Schwefel. Bei den Polymeren handelt es sich vorzugsweise um basische Polymere.

Vorzugsweise handelt es sich bei den basischen Polymeren um Polymere die mindestens ein Stickstoffatom umfassen.

Die Basizität des Polymeren kann auch über das Molverhältnis von Stickstoffatomen zu Kohlenstoffatomen definiert werden. Im Rahmen der vorliegenden Erfindung werden insbesondere solche Polymere umfasst, deren Molverhältnis von Stickstoffatomen zu Kohlenstoffatomen im Bereich von 1:1 bis 1:100, vorzugsweise im Bereich von 1:2 bis 1:20 liegt. Dieses Verhältnis kann über Elementaranalyse festgestellt werden.

Basische Polymere, insbesondere Polymere mit mindestens einem Stickstoffatom sind in der Fachwelt bekannt. Im Allgemeinen können erfindungsgemäß Polymere mit einem Stickstoffatom in der Hauptkette und/oder in der Seitenkette eingesetzt werden.

Zu den Polymeren mit einem Stickstoffatom in der Hauptkette gehören beispielsweise Polyphosphazene, Polyimine, Polyisocyanide, Polyetherimin, Polyanilin, Polyamide, Polyhydrazide, Polyurethane, Polyimide, Polyazole und/oder Polyazine.

Bevorzugt umfassen die Polymermembranen Polymere mit mindestens einem Stickstoffatom in einer Wiederholungseinheit verwendet. Hierbei können auch Copolymere eingesetzt werden, die neben Wiederholungseinheiten mit einem Stickstoffatom auch Wiederholungseinheiten ohne ein Stickstoffatom umfassen.

Gemäß einem besonderen Aspekt der vorliegenden Erfindung werden basische Polymere mit mindestens einem Stickstoffatom eingesetzt. Der Begriff basisch ist in der Fachwelt bekannt, wobei insbesondere Lewis- und Brønstedtbasizität hierunter zu verstehen ist.

Die Wiederholungseinheit im basischen Polymer enthält vorzugsweise einen aromatischen Ring mit mindestens einem Stickstoffatom. Bei dem aromatischen Ring handelt es sich vorzugsweise um einen fünf- oder sechsgliedrigen Ring mit eins bis drei Stickstoffatomen, der mit einem anderen Ring, insbesondere einem anderen aromatischen Ring, anelliert sein kann.

Polymere auf Basis von Polyazol enthalten im allgemeinen wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVII) und/oder (XVIII) und/oder (XIX) und/oder (XX) und/oder (XXI) und/oder (XXII) 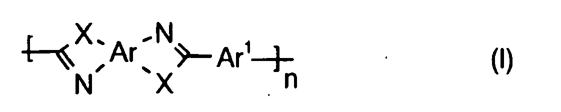 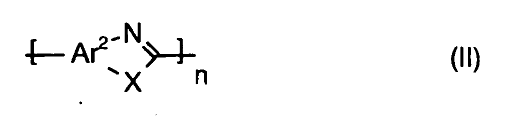 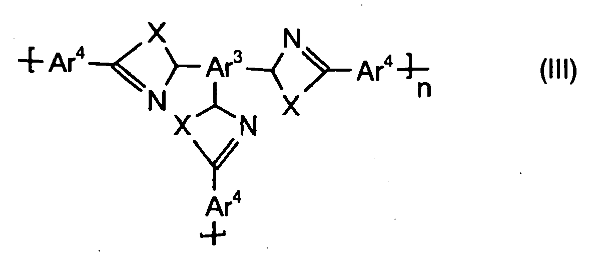 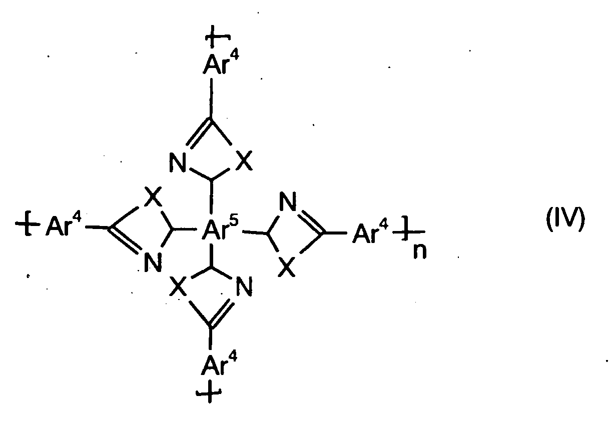 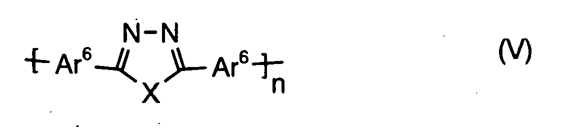 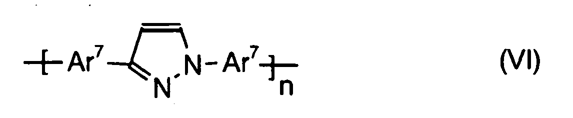 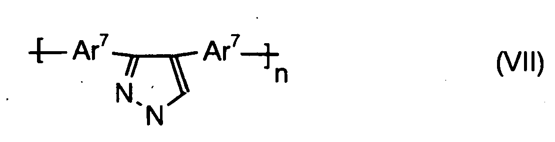 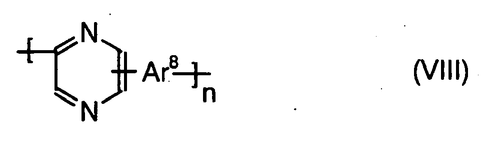 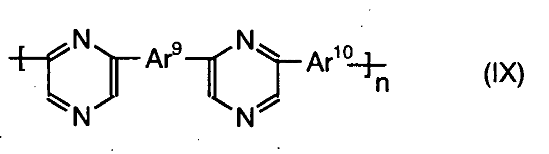 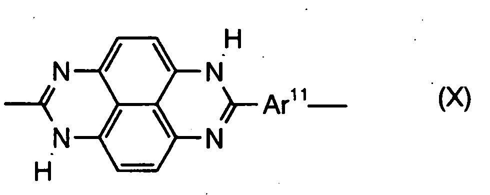 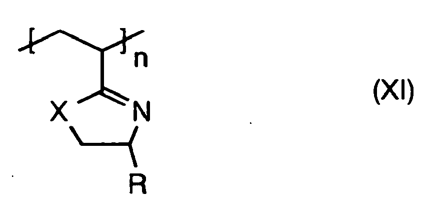 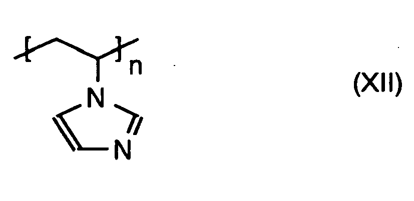 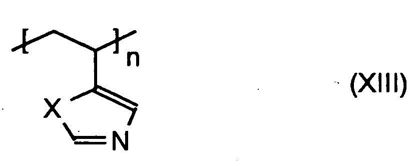 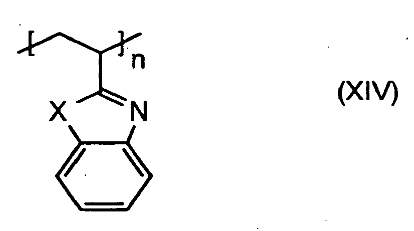 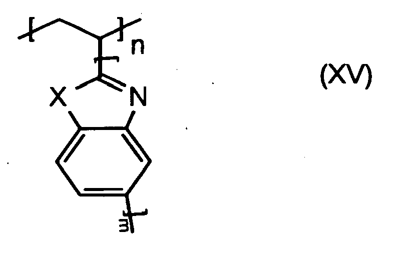 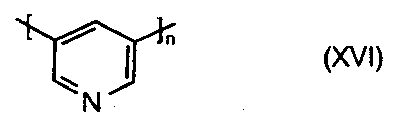 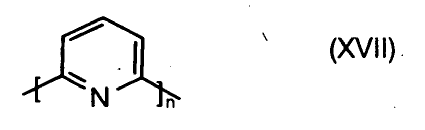 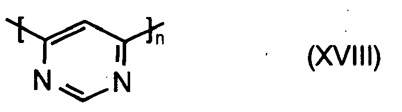 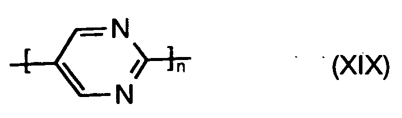 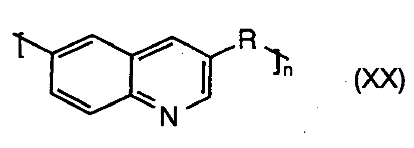 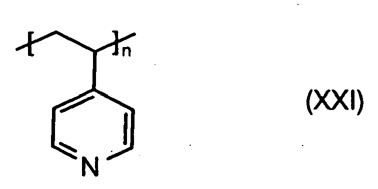 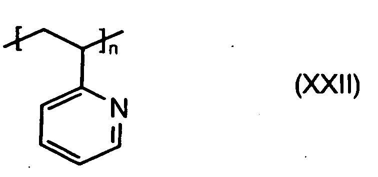 worin
- Ar: gleich oder verschieden sind und für eine vierbindige aromatische oder heteroaromatische Gruppe, die ein- oder mehrkernig sein kann,
- Ar¹: gleich oder verschieden sind und für eine zweibindige aromatische oder heteroaromatische Gruppe, die ein- oder mehrkernig sein kann,
- Ar²: gleich oder verschieden sind und für eine zwei oder dreibindige aromatische oder heteroaromatische Gruppe, die ein- oder mehrkernig sein kann,
- Ar³: gleich oder verschieden sind und für eine dreibindige aromatische oder heteroaromatische Gruppe, die ein- oder mehrkernig sein kann,
- Ar⁴: gleich oder verschieden sind und für eine dreibindige aromatische oder heteroaromatische Gruppe, die ein- oder mehrkernig sein kann,
- Ar⁵: gleich oder verschieden sind und für eine vierbindige aromatische oder heteroaromatische Gruppe, die ein- oder mehrkernig sein kann,
- Ar⁶: gleich oder verschieden sind und für eine zweibindige aromatische oder heteroaromatische Gruppe, die ein- oder mehrkernig sein kann,
- Ar⁷: gleich oder verschieden sind und für eine zweibindige aromatische oder heteroaromatische Gruppe, die ein- oder mehrkernig sein kann,
- Ar⁸: gleich oder verschieden sind und für eine dreibindige aromatische oder heteroaromatische Gruppe, die ein- oder mehrkernig sein kann,
- Ar⁹: gleich oder verschieden sind und für eine zwei- oder drei- oder vierbindige aromatische oder heteroaromatische Gruppe, die ein- oder mehrkernig sein kann,
- Ar¹⁰: gleich oder verschieden sind und für eine zwei- oder dreibindige aromatische oder heteroaromatische Gruppe, die ein- oder mehrkernig sein kann,
- Ar¹¹: gleich oder verschieden sind und für eine zweibindige aromatische oder heteroaromatische Gruppe, die ein- oder mehrkernig sein kann,
- X: gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
- R: gleich oder verschieden für Wasserstoff, eine Alkylgruppe und eine aromatische Gruppe steht, mit der Maßgabe das R in der Formel (XX) nicht für Wasserstoff steht und
- n, m: eine ganze Zahl größer gleich 10, bevorzugt größer gleich 100 ist.

Erfindungsgemäß bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, Isoxazol, Pyrazol, 1,3,4-Oxadiazol, 2,5-Diphenyl-1,3,4-oxadiazol, 1,3,4-Thiadiazol, 1,3,4-Triazol, 2,5-Diphenyl-1,3,4-triazol, 1,2,5-Triphenyl-1,3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Bipyridin, Pyrazin, Pyrazol, Pyrimidin, Pyridazin, 1,3,5-Triazin, 1,2,4-Triazin, 1,2,4,5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder Chinolizin, 4H-Chinolizin, Diphenylether, Anthracen, Benzopyrrol, Benzooxathiadiazol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren ab, die gegebenenfalls auch substituiert sein können.

Dabei ist das Substitionsmuster von Ar¹, Ar⁴, Ar⁶, Ar⁷, Ar⁸, Ar⁹, Ar¹⁰, Ar¹¹ beliebig, im Falle vom Phenylen beispielsweise kann Ar¹, Ar⁴, Ar⁶ , Ar⁷, Ar⁸, Ar⁹, Ar¹⁰, Ar¹¹ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrenden Benzimidazoleinheiten werden durch die nachfolgenden Formeln wiedergegeben: 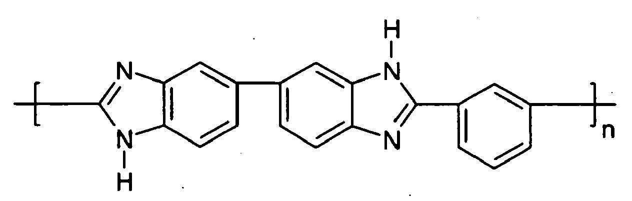 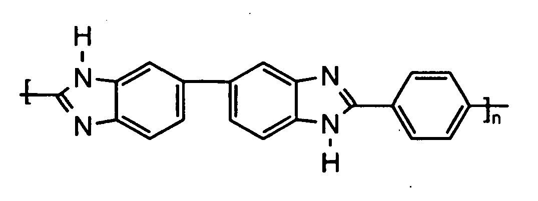 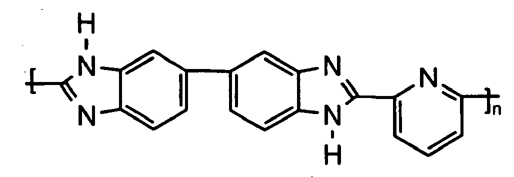 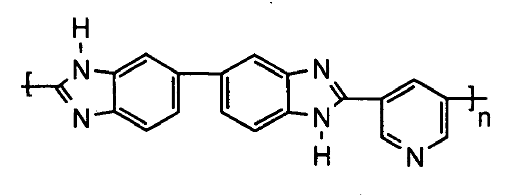 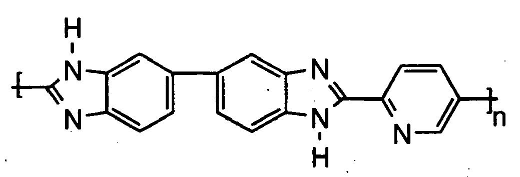 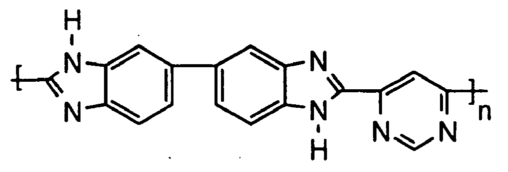 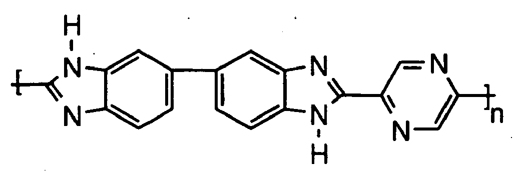 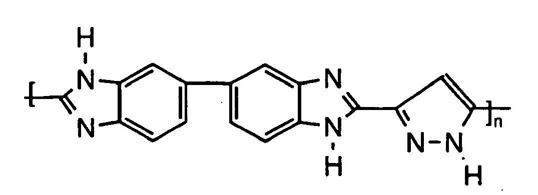 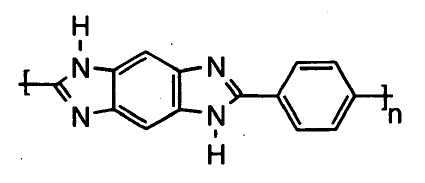 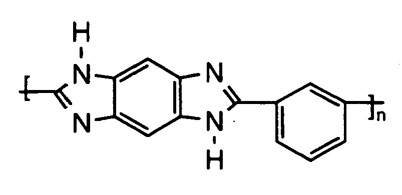 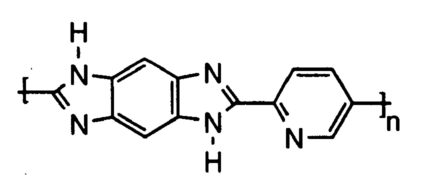 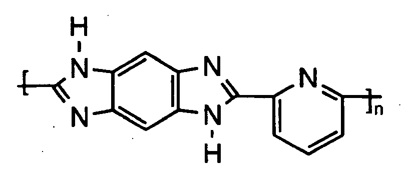 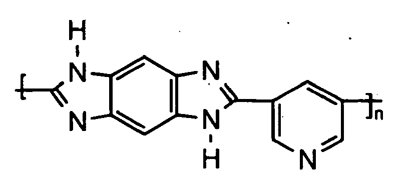 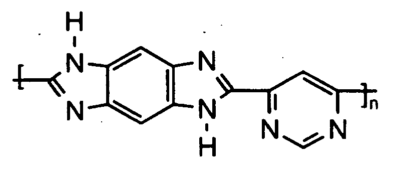 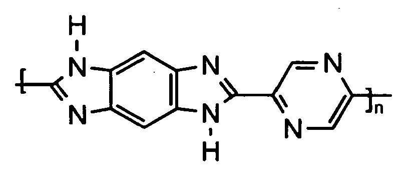 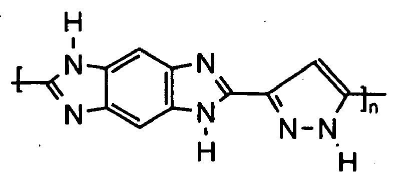 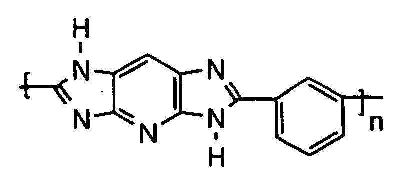 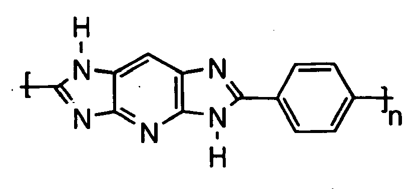 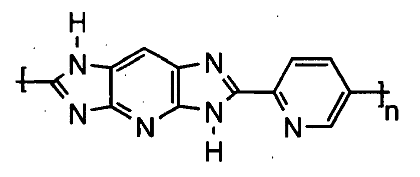 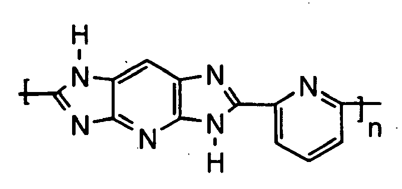 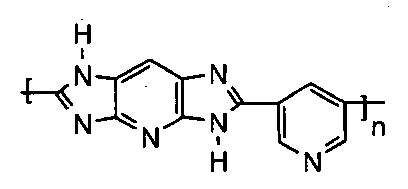 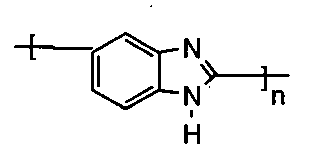 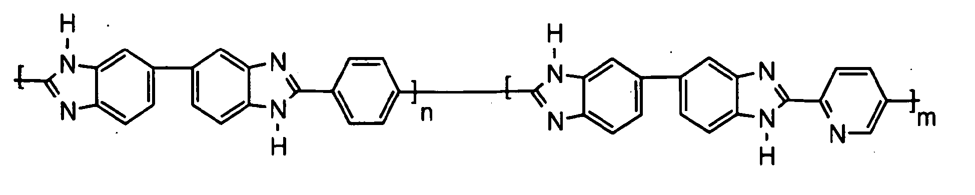 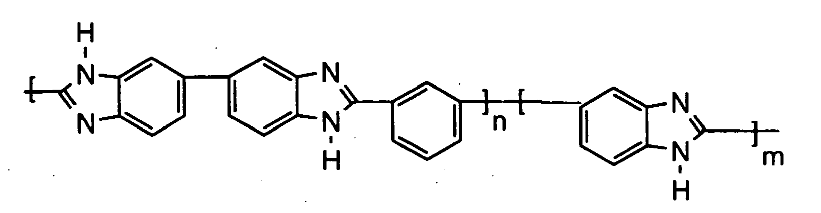 wobei n und m eine ganze Zahl größer gleich 10, vorzugsweise größer gleich 100 ist.

Weitere bevorzugte Polyazol-Polymere sind Polyimidazole,
Polybenzimidazoletherketon, Polybenzthiazole, Polybenzoxazole, Polytriazole, Polyoxadiazole, Polythiadiazole, Polypyrazole, Polyquinoxalines, Poly(pyridine), Poly(pyrimidine), und Poly(tetrazapyrene).

Bevorzugte Polyazole zeichnen sich durch ein hohes Molekulargewicht aus. Dies gilt insbesondere für die Polybenzimidazole. Gemessen als Intrinsische Viskosität liegt diese im Bereich von 0,3 bis 10 dl/g, vorzugsweise 1 bis 5 dl/g.

Besonders bevorzugt ist Celazole der Fa. Celanese. Die Eigenschaften der Polymerfolie und Polymermembran können durch Sieben des Ausgangspolymers, wie in der deutschen Patentanmeldung DE 10129458 A1 beschrieben, verbessert werden.

Ganz besonders bevorzugt werden para-Polybenzimidazole bei der Herstellung der Polymerelektrolytmembranen eingesetzt. Hierbei umfassen die Polybenzimidazole insbesondere sechsgliederige aromatische Gruppen, die in 1,4 Stellung verknüpft sind. Besonders bevorzugt wird Poly[2,2'-(p-phenylene)-5,5'-bisbenzimidazol] eingesetzt.

Die zur Dotierung eingesetzte Polymerfolie auf Basis von basischen Polymeren kann noch weitere Zusätze an Füll- und/oder Hilfsstoffen aufweisen. Zusätzlich kann der Polymerfilm weitere Modifizierungen, beispielsweise durch Vernetzung wie in der deutschen Patentanmeldung DE 10110752 A1 oder in WO 00/44816 aufweisen. In einer bevorzugten Ausführungsform enthält die zur Dotierung eingesetzte Polymerfolie aus einem basischen Polymer und mindestens einer Blendkomponente zusätzlich einem Vernetzer wie in der deutschen Patentanmeldung DE 10140147 A1 beschrieben. Wesentlicher Vorteil eines solchen Systems ist die Tatsache dass höhere Dotierungsgrade und somit höhere Leitfähigkeit bei ausreichender mechanischer Membranstabilität erzielt werden können.

Neben den vorstehend genannten basischen Polymeren kann auch ein Blend aus einem oder mehreren basischen Polymeren mit einem weiteren Polymer eingesetzt werden. Die weitere Blendkomponente hat dabei im Wesentlichen die Aufgabe die mechanischen Eigenschaften zu verbessern und die Materialkosten zu verringern.

Zu den bevorzugten Blendkomponenten gehören Polysulfone, insbesondere Polysulfon mit aromatischen und/oder heteroaromatischen Gruppen in der Hauptkette. Gemäß einem besonderen Aspekt der vorliegenden Erfindung weisen bevorzugte Polysulfone und Polyethersulfone eine Schmelzvolumenrate MVR 300/21,6 kleiner oder gleich 40 cm³/10 min, insbesondere kleiner oder gleich 30 cm³/ 10 min und besonders bevorzugt kleiner oder gleich 20 cm³/ 10 min gemessen nach ISO 1133 auf. Hierbei sind Polysulfone mit einer Vicat-Erweichungstemperatur VST/A/50 von 180°C bis 230°C bevorzugt. In noch einer bevorzugten Ausführungsform der vorliegenden Erfindung ist das Zahlenmittel des Molekulargewichts von den Polysulfonen größer als 30.000 g/mol.

Zu den Polymeren auf Basis von Polysulfon gehören insbesondere Polymere, welche wiederkehrende Einheiten mit verknüpfenden Sulfon-Gruppen entsprechend den allgemeinen Formeln A, B, C, D, E, F und/oder G aufweisen:

-O-R-SO₂-R- (A)

-O-R-SO₂-R-O-R- (B)

-O-R-SO₂-R-O-R-R- (C)

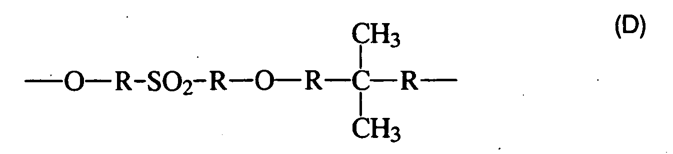

-O-R-SO₂-R-R-SO₂-R- (E)

-O-R-SO₂-R-R-SO₂-R-O-R-SO₂-] (F)

-[O-R-SO₂-R]-[SO₂-R-R-]- (G),

worin die Reste R unabhängig voneinander gleich oder verschieden eine aromatische oder heteroaromatische Gruppen darstellen, wobei diese Reste zuvor näher erläutert wurden. Hierzu gehören insbesondere 1,2-Phenylen, 1,3-Phenylen, 1,4-Phenylen, 4,4'-Biphenyl, Pyridin, Chinolin, Naphthalin, Phenanthren.

Zu den im Rahmen der vorliegenden Erfindung bevorzugten Polysulfone gehören Homo- und Copolymere, beispielsweise statistische Copolymere. Besonders bevorzugte Polysulfone umfassen wiederkehrende Einheiten der Formeln H bis N:

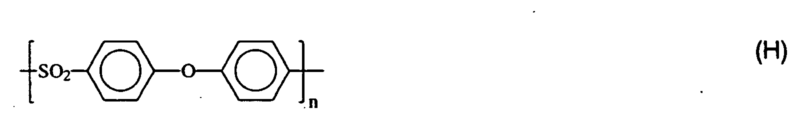

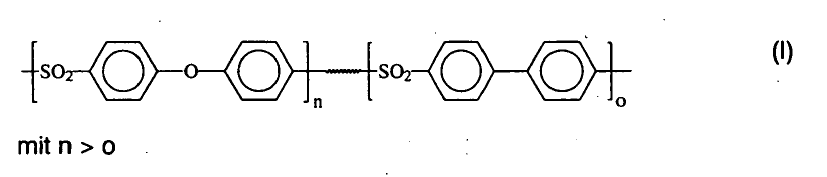

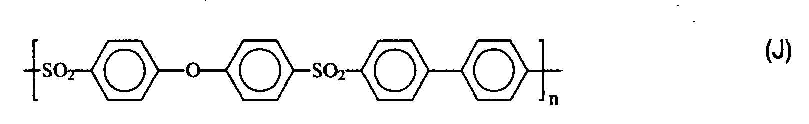

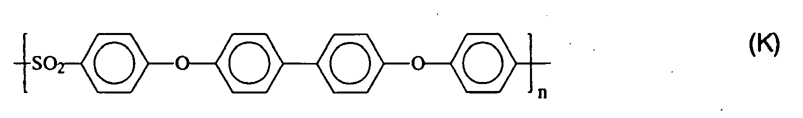

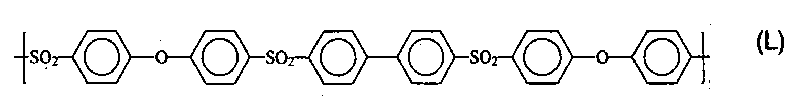

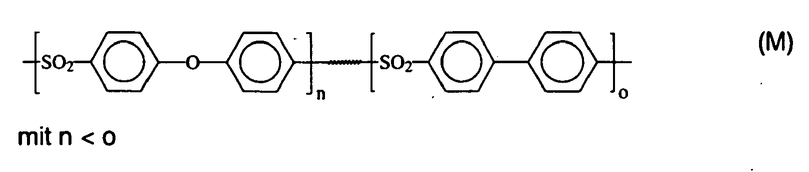

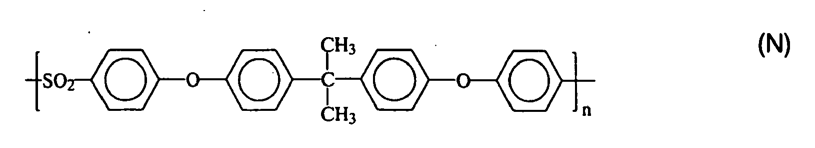

Die zuvor beschriebenen Polysulfone können unter den Handelsnamen ^{®}Victrex 200 P, ^{®}Victrex 720 P, ^{®}Ultrason E, ^{®}Ultrason S, ^{®}Mindel, ^{®}Radel A, ^{®}Radel R, ^{®}Victrex HTA, ^{®}Astrel und ^{®}Udel kommerziell erhalten werden.

Darüber hinaus sind Polyetherketone, Polyetherketonketone, Polyetheretherketone, Polyetheretherketonketone und Polyarylketone besonders bevorzugt. Diese Hochleistungspolymere sind an sich bekannt und können unter den Handelsnamen Victrex® PEEK^{™}, ^{®}Hostatec, ^{®}Kadel kommerziell erhalten werden.

Des Weiteren können auch polymere Blendkomponenten eingesetzt werden, die Säuregruppen enthalten. Diese Säuregruppen umfassen insbesondere Sulfonsäuregruppen. Bevorzugt können hierbei Polymere mit aromatischen Sulfonsäuregruppen eingesetzt werden.

Aromatische Sulfonsäuregruppen sind Gruppen, bei denen die Sulfonsäuregruppe (-SO₃H kovalent an eine aromatischen oder heteroaromatischen Gruppe gebunden ist. Die aromatische Gruppe kann ein Teil der Hauptkette (back bone) des Polymeren oder ein Teil einer Seitengruppe sein, wobei Polymere mit aromatischen Gruppen in der Hauptkette bevorzugt sind. Die Sulfonsäuregruppen können vielfach auch in Form der Salze eingesetzt werden. Des weiteren können auch Derivate, beispielsweise Ester, insbesondere Methyl- oder Ethylester, oder Halogenide der Sulfonsäuren verwendet werden, die beim Betrieb der Membran in die Sulfonsäure umgesetzt werden.

Die mit Sulfonsäuregruppen modifizierten Polymere besitzen vorzugsweise einen Gehalt an Sulfonsäuregruppen im Bereich von 0,5 bis 3 meq/g. Dieser Wert wird über die sog. Ionenaustauschkapazität (IEC) bestimmt.

Zur Messung der IEC werden die Sulfonsäuregruppen in die freie Säure überführt. Hierzu wird das Polymere auf bekannte Weise mit Säure behandelt, wobei überschüssige Säure durch Waschen entfernt wird. So wird das sulfonierte Polymer zunächst 2 Stunden in siedendem Wasser behandelt. Anschließend wird überschüssiges Wasser abgetupft und die Probe während 15 Stunden bei 160°C im Vakuumtrockenschrank bei p<1 mbar getrocknet. Dann wird das Trockengewicht der Membran bestimmt. Das so getrocknete Polymer wird dann in DMSO bei 80°C während 1 h gelöst. Die Lösung wird anschliessend mit 0,1 M NaOH titriert. Aus dem Verbrauch der Säure bis zum Equivalentpunkt und dem Trockengewicht wird dann die Ionenaustauschkapazität (IEC) berechnet.

Derartige Polymere sind in der Fachwelt bekannt. So können Sulfonsäuregruppen enthaltende Polymere beispielsweise durch Sulfonierung von Polymeren hergestellt werden. Verfahren zur Sulfonierung von Polymeren sind in F. Kucera et. al. Polymer Engineering and Science1988, Vol. 38, No 5, 783-792 beschrieben. Hierbei können die Sulfonierungsbedingungen so gewählt werden, dass ein niedriger Sulfonierungsgrad entsteht (DE-A-19959289).

So wurde eine weitere Klasse nichtfluorierter Polymere durch Sulfonierung von hochtemperaturstabilen Thermoplasten entwickelt. So sind sulfonierte Polyetherketone (DE-A-4219077, WO96/01177), sulfonierte Polysulfone (J. Membr. Sci. 83 (1993) p.211) oder sulfoniertes Polyphenylensulfid (DE-A-19527435) bekannt.

US-A-6110616 beschreibt Copolymere aus Butadien und Styrol und deren anschliesende Sulfonierung zur Verwendung für Brennstoffzellen.

Des weiteren können derartige Polymere auch durch Polyreaktionen von Monomeren erhalten werden, die Säuregruppen umfassen. So können perfluoronierte Polymere wie in US-A-5422411 beschrieben durch Copolymerisation aus Trifluorostyrol und sulfonylmodifiziertem Trifuorostyrol hergestellt werden.

Zu diesen Perfluorosulfonsäurepolymeren gehört unter anderem Nafion^{®} (US-A-3692569). Dieses Polymer kann - wie in US-A-4453991 beschrieben - in Lösung gebracht und dann als lonomer eingesetzt werden.

Zu den bevorzugten Polymeren mit Säuregruppen gehören unter anderem sulfonierte Polyetherketone, sulfonierte Polysulfone, sulfonierte Polyphenylensulfide, perfluorinierte sulfonsäuregruppenhaltige Polymere, wie in US-A-3692569, US-A-5422411 und US-A-6110616 beschrieben.

Neben den vorstehend genannten Blendmaterialien können auch Polyolefine, wie Poly(cloropren), Polyacetylen, Polyphenylen, Poly(p-xylylen), Polyarylmethylen, Polyarmethylen, Polystyrol, Polymethylstyrol, Polyvinylalkohol, Polyvinylacetat, Polyvinylether, Polyvinylamin, Poly(N-vinylacetamid), Polyvinylimidazol, Polyvinylcarbazol, Polyvinylpyrrolidon, Polyvinylpyridin, Polyvinylchlorid, Polyvinylidenchlorid, Polytetrafluorethylen, Polyhexafluorpropylen, Copolymere von PTFE mit Hexafluoropropylen, mit Perfluorpropylvinylether, mit Trifluoronitrosomethan, mit Sulfonylfluoridvinylether, mit Carbalkoxyperfluoralkoxyvinylether, Polychlortrifluorethylen, Polyvinylfluorid, Polyvinylidenfluorid, Polyacrolein, Polyacrylamid, Polyacrylnitril, Polycyanacrylate, Polymethacrylimid, Cycloolefinische Copolymere, insbesondere aus Norbornen;
Polymere mit C-O-Bindungen in der Hauptkette, beispielsweise Polyacetal, Polyoxymethylen, Polyether, Polypropylenoxid, Polyepichlorhydrin, Polytetrahydrofuran, Polyphenylenoxid, Polyetherketon, Polyester, insbesondere Polyhydroxyessigsäure, Polyethylenterephthalat, Polybutylenterephthalat, Polyhydroxybenzoat, Polyhydroxypropionsäure, Polypivalolacton, Polycaprolacton, Polymalonsäure, Polycarbonat;
Polymere C-S-Bindungen in der Hauptkette, beispielsweise Polysulfidether, Polyphenylensulfid, Polyethersulfon;
Polymere C-N-Bindungen in der Hauptkette, beispielsweise Polyimine, Polyisocyanide,Polyetherimin, Polyanilin, Polyamide, Polyhydrazide, Polyurethane, Polyimide, Polyazole, Polyazine;
Flüssigkristalline Polymere, insbesondere Vectra sowie Anorganische Polymere, beispielsweise Polysilane, Polycarbosilane, Polysiloxane, Polykieselsäure, Polysilikate, Silicone, Polyphosphazene und Polythiazyl, eingesetzt werden.

Durch die Verwendung von Blends können die mechanischen Eigenschaften verbessert und die Materialkosten verringert werden.

Zusätzlich kann - wie bereits vorstehend erwähnt - auch die Blend-Polymerfolie weitere Modifizierungen, beispielsweise durch Vernetzung, wie in der deutschen Patentanmeldung DE 10110752 A1 oder in WO 00/44816 beschrieben, aufweisen. In einer bevorzugten Ausführungsform enthält die zur Quellung eingesetzte Polymerfolie aus einem basischen Polymer und mindestens einer Blendkomponente zusätzlich einem Vernetzer wie in der deutschen Patentanmeldung DE 10140147 A1 beschrieben.

Zur Herstellung von Polymerfolien können die zuvor dargelegten Polymere unter anderem extrudiert werden. Des Weiteren sind Polymerfolien durch Gießverfahren erhältlich. So können beispielsweise Polyazole in polaren, aprotischen Lösemitteln wie beispielsweise Dimethylacetamid (DMAc) gelöst und eine Folie mittels klassischer Verfahren erzeugt werden.

Zur Entfernung von Lösemittelresten wie DMAc kann die so erhaltene Folie mittels eines Waschprozesses gereinigt werden.

Als besonders gut geeignet haben sich Polymerelektrolyt-Matrices aus Basis von basischen Polymeren wie in DE 10117686 A1, DE 10117687 A1 und DE 10144815 A1, DE 10228657 A1, DE 10246373 A1 und DE 10246459 A1 beschrieben gezeigt.

Neben den vorstehend beschriebenen Polymerelektrolyt-Matrices aus basischen Polymeren und Blends aus basischen Polymeren und weiteren Polymeren können auch andere Materialien eingesetzt werden.

Hier sind insbesondere Polymerelektrolyt-Matrices aus Basis von basischen Polymeren und Vinylsulfon/Vinylphosphon basierenden Polymeren wie in DE 10213540 A1, DE 10209419 A1 und DE 10210500 A1, DE 10210499 A1, DE 10235358 A1, DE 10235357 A1 und DE 10235356 A1 beschrieben gezeigt.

Bei den vorstehend bezeichneten Polymerelektrolyt-Matrices aus Basis von basischen Polymeren und Vinylsulfon/Vinylphosphon basierenden Polymeren werden die vorstehend genannten basischen Polymere in Verbindung mit Vinylsulfon/Vinylphosphon basierenden Polymeren erzeugt. Als Polymere auf Vinylsulfon/Vinylphosphon-Basis werden Polymere verstanden, welche unter Einsatz von Phosphonsäuregruppen umfassenden Monomeren der Formel 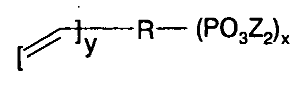 worin
- R: eine Bindung, eine zweibindige C1-C15-Alkylengruppe, zweibindige C1-C15- Alkylenoxygruppe, beispielsweise Ethylenoxygruppe oder zweibindige C5- C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15- Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet
- y: eine ganze Zahl 1, 2, 3, 4, 5, 6, 7, 8, 9 oder 10 bedeutet
und/oder der Formel 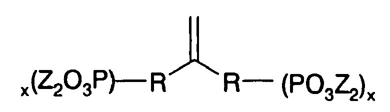 worin
- R: eine Bindung, eine zweibindige C1-C15-Alkylengruppe, zweibindige C1-C15- Alkylenoxygruppe, beispielsweise Ethylenoxygruppe oder zweibindige C5- C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15- Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet
und/oder der Formel 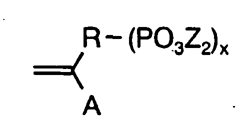 worin
- A: eine Gruppe der Formeln COOR², CN, CONR²₂, OR² und/oder R² darstellt, worin R² Wasserstoff, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, NZ₂ substituiert sein können
- R: eine Bindung, eine zweibindige C1-C15-Alkylengruppe, zweibindige C1-C15- Alkylenoxygruppe, beispielsweise Ethylenoxygruppe oder zweibindige C5- C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15- Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet,
und/oder unter Einsatz von Sulfonsäuregruppen umfassenden Monomeren der Formel 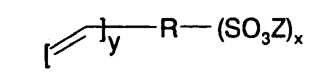 worin
- R: eine Bindung, eine zweibindige C1-C15-Alkylengruppe, zweibindige C1-C15- Alkylenoxygruppe, beispielsweise Ethylenoxygruppe oder zweibindige C5- C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15- Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet
- y: eine ganze Zahl 1, 2, 3, 4, 5, 6, 7, 8, 9 oder 10 bedeutet
und/oder der Formel 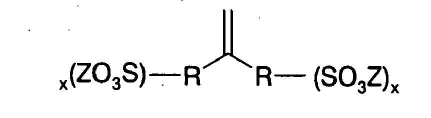 worin
- R: eine Bindung, eine zweibindige C1-C15-Alkylengruppe, zweibindige C1-C15- Alkylenoxygruppe, beispielsweise Ethylenoxygruppe oder zweibindige C5- C20-Aryl- oder Heteroarylgruppe bedeutet, wobei die vorstehenden Reste ihrerseits mit Halogen, -OH, COOZ, -CN, NZ2 substituiert sein können,
- Z: unabhängig voneinander Wasserstoff, C1-C15-Alkylgruppe, C1-C15- Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet
und/oder der Formel 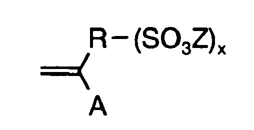 worin
- A: eine Gruppe der Formeln COOR², CN, CONR²₂, OR² und/oder R² darstellt, worin R² Wasserstoff, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, NZ₂ substituiert sein können
- R: eine Bindung, eine zweibindige C1-C15-Alkylengruppe, zweibindige C1-C15- Alkylenoxygruppe, beispielsweise Ethylenoxygruppe oder zweibindige C5- C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15- Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet,
erhalten werden, wie beispielsweise in DE 10213540 A1, DE 10209419 A1 und DE 10210500 A1, DE 10210499 A1, DE 10235358 A1, DE 10235357 A1 und DE 10235356 A1 beschrieben.

Zu den bevorzugten Phosphonsäuregruppen umfassenden Monomeren gehören unter anderem Alkene, die Phosphonsäuregruppen aufweisen, wie Ethenphosphonsäure, Propenphosphonsäure, Butenphosphonsäure; Acrylsäure-und/oder Methacrylsäure-Verbindungen, die Phosphonsäuregruppen aufweisen, wie beispielsweise 2-Phosphonomethyl-acrylsäure, 2-Phosphonomethyl-methacrylsäure, 2-Phosphonomethyl-acrylsäureamid und 2-Phosphonomethyl-methacrylsäureamid.

Besonders bevorzugt wird handelsübliche Vinylphosphonsäure (Ethenphosphonsäure), wie diese beispielsweise von der Firma Aldrich oder Clariant GmbH erhältlich ist, eingesetzt. Eine bevorzugte Vinylphosphonsäure weist eine Reinheit von mehr als 70%, insbesondere 90% und besonders bevorzugt mehr als 97% Reinheit auf.

Die Phosphonsäuregruppen umfassenden Monomere können des Weiteren auch in Form von Derivaten eingesetzt werden, die anschließend in die Säure überführt werden können, wobei die Überführung zur Säure auch in polymerisiertem Zustand erfolgen kann. Zu diesen Derivaten gehören insbesondere die Salze, die Ester, die Amide und die Halogenide der Phosphonsäuregruppen umfassenden Monomere.

Zu den bevorzugten Sulfonsäuregruppen umfassenden Monomeren gehören unter anderem Alkene, die Sulfonsäuregruppen aufweisen, wie Ethensulfonsäure, Propensulfonsäure, Butensulfonsäure; Acrylsäure- und/oder Methacrylsäure-Verbindungen, die Sulfonsäuregruppen aufweisen, wie beispielsweise 2-Sulfonomethyl-acrylsäure, 2-Sulfonomethyl-methacrylsäure, 2-Sulfonomethylacrylsäureamid und 2-Sulfonomethyl-methacrylsäureamid.

Besonders bevorzugt wird handelsübliche Vinylsulfonsäure (Ethensulfonsäure), wie diese beispielsweise von der Firma Aldrich oder Clariant GmbH erhältlich ist, eingesetzt. Eine bevorzugte Vinylsulfonsäure weist eine Reinheit von mehr als 70%, insbesondere 90 % und besonders bevorzugt mehr als 97% Reinheit auf.

Die Sulfonsäuregruppen umfassenden Monomere können des Weiteren auch in Form von Derivaten eingesetzt werden, die anschließend in die Säure überführt werden können, wobei die Überführung zur Säure auch in polymerisiertem Zustand erfolgen kann. Zu diesen Derivaten gehören insbesondere die Salze, die Ester, die Amide und die Halogenide der Sulfonsäuregruppen umfassenden Monomere.

Gemäß einem besonderen Aspekt der vorliegenden Erfindung kann das Gewichtsverhältnis von Sulfonsäuregruppen umfassenden Monomeren zu Phosphonsäuregruppen umfassenden Monomeren im Bereich von 100:1 bis 1:100, vorzugsweise 10:1 bis 1:10 und besonders bevorzugt 2:1 bis 1:2 liegen.

In einer weiteren Ausführungsform der Erfindung können bei der Herstellung der Polymermembran zur Vernetzung befähigte Monomere eingesetzt werden. Bei den zur Vernetzung befähigten Monomeren handelt es sich insbesondere um Verbindungen, die mindestens 2 Kohlenstoff-Kohlenstoff Doppelbindungen aufweisen. Bevorzugt werden Diene, Triene, Tetraene, Dimethylacrylate, Trimethylacrylate, Tetramethylacrylate, Diacrylate, Triacrylate, Tetraacrylate.

Besonders bevorzugt sind Diene, Triene, Tetraene der Formel

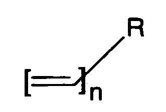

Dimethylacrylate, Trimethylacrylate, Tetramethylacrylate der Formel

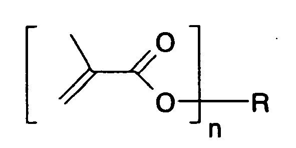

Diacrylate, Triacrylate, Tetraacrylate der Formel 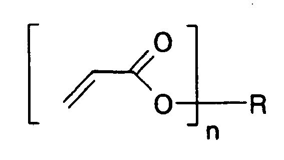 worin
- R eine: C1-C15-Alkylgruppe, C5-C20-Aryl oder Heteroarylgruppe, NR', -SO₂, PR', Si(R')₂ bedeutet, wobei die vorstehenden Reste ihrerseits substituiert sein können,
- R': unabhängig voneinander Wasserstoff, eine C1-C15-Alkylgruppe, C1-C15- Alkoxygruppe, C5-C20-Aryl oder Heteroarylgruppe bedeutet und
- n: mindestens 2 ist.

Bei den Substituenten des vorstehenden Restes R handelt es sich vorzugsweise um Halogen-, Hydroxyl-, Carboxy-, Carboxyl-, Carboxylester-, Nitril-, Amin-, Silyl Siloxan- Reste.

Besonders bevorzugte Vernetzer sind Allylmethacrylat, Ethylenglykoldimethacrylat, Diethylenglykoldimethacrylat, Triethylenglykoldimethacrylat, Tetra- und Polyethylenglykoldimethacrylat, 1,3-Butandioldimethacrylat, Glycerindimethacrylat, Diurethandimethacrylat, Trimethylpropantrimethacrylat, Epoxyacrylate, beispielsweise Ebacryl, N',N-Methylenbisacrylamid, Carbinol, Butadien, Isopren, Chloropren, Divinylbenzol und/oder Bisphenol-A-dimethylacrylat. Diese Verbindungen sind beispielsweise von Sartomer Company Exton, Pennsylvania unter den Bezeichnungen CN-120, CN104 und CN-980 kommerziell erhältlich.

Der Einsatz von Vernetzern ist optional, wobei diese Verbindungen üblich im Bereich zwischen 0,05 bis 30 Gew.-%, vorzugsweise 0,1 bis 20 Gew.%, besonders bevorzugt 1 und 10 Gew.%, bezogen auf das Gewicht der Phosphonsäuregruppen umfassenden Monomere, eingesetzt werden können.

Ein wesentlicher Aspekt und technischer Vorteil der erfindungsgemäßen Membran-Elektroden-Einheit liegt darin, dass die hervorragende Leistungsfähigkeit mit einem bis dahin noch nicht erreichten geringen Gehalt an katalytisch aktiven Substanzen, wie beispielsweise Platin, Ruthenium oder Palladium erzielt wird.

Zur weiteren Verbesserung der anwendungstechnischen Eigenschaften kann das flächige Material Füllstoffe, insbesondere protonenleitende Füllstoffe, aufweisen.

Nicht limitierende Beispiele für Protonenleitende Füllstoffe sind
- Sulfate wie:: CsHSO₄, Fe(SO₄)₂, (NH₄)₃H(SO₄)₂, LiHSO₄, NahO₄, KHSO₄, RbSO₄, LiN₂H₅SO₄, NH₄HSO₄,
- Phosphate wie: Zr₃(PO₄)₄, Zr(HPO₄)₂, HZr₂(PO₄)₃, UO₂PO₄.3H₂O, H₈UO₂PO₄, Ce(HPO₄)₂ Ti(HPO₄)₂, KH₂PO₄, NaH₂PO₄, LiH₂PO₄, NH₄H₂PO₄, CSH₂PO₄, CaHPO₄, MgHPO₄, HSbP₂O₈, HSb₃P₂O₁₄, H₅Sb₅P₂O₂₀,
- Polysäure wie: H₃PW₁₂O₄₀.nH₂O (n=21-29), H₃SiW₁₂O₄₀.nH₂O (n=21-29), HₓWO₃, HSbWO₆, H₃PMo₁₂O₄₀, H₂Sb₄O₁₁, HTaWO₆, HNbO₃, HTiNbO₅, HTiTaO₅, HSbTeO₆, H₅Ti₄O₉, HSbO₃, H₂MoO₄
- Selenide und Arsenide wie: (NHₐ)₃H(SeOₐ)₂, UO₂AsO₄, (NH₄)₃H(SeO₄)₂, KH₂ASO₄, CS₃H(SeO₄)₂, Rb₃H(SeO₄)₂,
- Phosphide wie: ZrP, TiP, HfP
- Oxide wie: Al₂O₃, Sb₂O₅, ThO₂, SnO₂, ZrO₂, MoO₃
- Silikate wie: Zeolithe, Zeolithe(NH₄+), Schichtsilikate, Gerüstsilikate, H-Natrolite, H-Mordenite, NH₄-Analcine, NH₄-Sodalite, NH₄-Gallate, H- Montmorillonite
- Säuren wie: HClO₄, SbF₅
- Füllstoffe wie: Carbide, insbesondere SiC, Si₃N₄, Fasern, insbesondere Glasfasern, Glaspulvern und/oder Polymerfasern, bevorzugt auf Basis von Polyazolen.

Diese Additive können in der protonenleitenden Polymermembran in üblichen Mengen enthalten sein, wobei jedoch die positiven Eigenschaften, wie hohe Leitfähigkeit, hohe Lebensdauer und hohe mechanische Stabilität der Membran durch Zugabe von zu großen Mengen an Additiven nicht allzu stark beeinträchtigt werden sollten. Im Allgemeinen umfasst die Membran höchstens 80 Gew.-%, vorzugsweise höchstens 50 Gew.% und besonders bevorzugt höchstens 20 Gew.-% Additive.

Die erfindungsgemäß konditionierten Membran-Elektroden-Einheiten enthalten in der Polymerelektrolyt-Matrix mindestens eine Sauerstoffsäure des Phosphors und/oder Schwefels. Bei den vorstehend bezeichneten Säuren handelt es sich um starke Säuren, insbesondere um Mineralsäuren, insbesondere bevorzugt um Phosphorsäure und/oder Schwefelsäure sowie deren Derivate.

Im Rahmen der vorliegenden Beschreibung versteht man unter "Phosphorsäure" Polyphosphorsäure (Hₙ₊₂PₙO₃ₙ₊₁ (n>1) besitzen üblicherweise einen Gehalt berechnet als P₂O₅ (acidimetrisch) von mindestens 83%), Phosphonsäure (H₃PO₃), Orthophosphorsäure (H₃PO₄), Pyrophosphorsäure (H₄P₂O₇), Triphosphorsäure (H₅P₃O₁₀) und Metaphosphorsäure. Die Phosphorsäure, insbesondere Orthophosphorsäure, hat vorzugsweise eine Konzentration von mindestens 80 Gewichtsprozent. Des weiteren umfasst der Begriff Phosphorsäure auch solche Verbindungen, die während des Einsatzes in der Brennstoffzelle entsprechende Phosphorsäuren freisetzen oder durch Auf- oder Abbau bilden. Hierunter sind insbesondere organische Phosphorsäuren bzw. deren Derivate zu verstehen.

Die erfindungsgemäß eingesetzte Polymerelektrolyt-Matrix ist protonenleitend. Des Weiteren besitzt die Polymerelektrolyt-Matrix mindestens 6 Mol Säure pro Polymer-Wiederholungseinheit, vorzugsweise mindestens 8 Mol, besonders bevorzugt mindestens 14 Mol.

Die Dicke der Polymerelektrolyt-Matrix in der Membran-Elektroden-Einheit beträgt vorzugsweise zwischen 5 und 4000 µm, vorzugsweise zwischen 10 und 3500 µm, insbesondere zwischen 20 und 3000 µm, besonders bevorzugt zwischen 30 und 1500µm und ganz besonders bevorzugt zwischen 50 und 1200 µm.

Die Polymerelektrolyt-Matrix weist eine hohe Protonenleitfähigkeit auf. Diese beträgt bei Temperaturen von 120°C mindestens 0,1 S/cm, vorzugsweise mindestens 0,11 S/cm, insbesondere mindestens 0,12 S/cm.

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser), wie in DE 10117687 A1 beschrieben, gemessen.

Eine erfindungsgemäße Membran-Elektroden-Einheit umfasst neben der Polymermembran mindestens zwei Elektroden, die jeweils mit der Membran in Kontakt stehen.

Im Allgemeinen umfasst die Elektrode eine Gasdiffusionslage. Die Gasdiffusionslage zeigt im Allgemeinen eine Elektronenleitfähigkeit. Üblich werden hierfür flächige, elektrisch leitende und säureresistente Gebilde eingesetzt. Zu diesen gehören beispielsweise Kohlefaser-Papiere, graphitisierte Kohlefaser-Papiere, Kohlefasergewebe, graphitisierte Kohlefasergewebe und/oder flächige Gebilde, die durch Zugabe von Ruß leitfähig gemacht wurden.

Des weiteren enthält die Elektrode mindestens eine Katalysatorschicht. Diese Schicht enthält mindestens ein Edelmetall der Platingruppe, insbesondere Pt, Pd, Ir, Rh, Os, Ru, und/oder mindestens ein Edelmetall Au und/oder Ag oder die Katalysatorschicht wird gebildet aus
i. mindestens einem Edelmetall der Platingruppe, insbesondere Pt, Pd, Ir, Rh, Os, Ru, und/oder mindestens ein Edelmetall Au und/oder Ag,
ii. und mindestens ein gemäß der elektrochemischen Spannungsreihe unedleres Metall als das unter (i.) genannte Metall, insbesondere ausgewählt aus der Gruppe Fe, Co, Ni, Cr, Mn, Zr, Ti, Ga, V.

Vorzugsweise wird der Katalysator in Form einer Legierung aus den Metallen (i) und (ii) gebildet. Zusätzlich zu der Legierung können weitere katalytisch aktive Substanzen, insbesondere Edelmetalle der Platingruppe, d.h. Pt, Pd, Ir, Rh, Os, Ru, oder auch die Edelmetalle Au und Ag, eingesetzt werden. Weiterhin können auch die Oxide der vorgenannten Edelmetalle und/oder Nicht-Edelmetalle eingesetzt werden.

Die katalytisch aktiven Partikel, die die zuvor genannten Substanzen umfassen, können als Metallpulver, sogenanntes schwarzes Edelmetall, insbesondere Platin und/oder Platinlegierungen, eingesetzt werden. Derartige Partikel weisen im allgemeinen eine Größe im Bereich von 5 nm bis 200 nm, vorzugsweise im Bereich von 7 nm bis 100 nm auf.

Darüber hinaus können die Metalle auch auf einem Trägermaterial eingesetzt werden. Vorzugsweise umfasst dieser Träger Kohlenstoff, der insbesondere in Form von Ruß, Graphit oder graphitisierter Ruß, eingesetzt werden kann. Weiterhin können auch elektrisch leitfähige Metalloxide, wie zum Beispiel SnOₓ, TiOₓ, oder Phosphate, wie z.B. FePOₓ, NbPOₓ, Zr_{y}(POₓ)_{z} als Trägermaterial verwendet werden. Hierbei kennzeichnen die Indices x, y und z den Sauerstoff bzw. Metallgehalt der einzelnen Verbindungen, die in einem bekannten Bereich liegen können, da die Übergangsmetalle unterschiedliche Oxidationsstufen einnehmen können.

Der Gehalt dieser geträgerten Metall-Partikel, bezogen auf das Gesamtgewicht der Metall-Träger-Verbindung, liegt im allgemeinen im Bereich von 1 bis 80 Gew.%. Die Partikelgröße des Trägers, insbesondere die Größe der Kohlenstoffpartikel, liegt vorzugsweise im Bereich von 20 bis 100 nm. Die Größe der sich hierauf befindlichen Metallpartikel liegt vorzugsweise im Bereich von 1 bis 20 nm.

Die Katalysatorschicht hat eine Dicke im Bereich von 0,1 bis 50 µm.

Die erfindungsgemäße Membran-Elektroden-Einheit weist eine Beladung mit Katalysator zwischen 0,1 und 10 g/m² auf, bezogen auf die Oberfläche der Polymerelektrolyt-Matrix.

Das Gewichtsverhältnis der Edelmetalle der Platingruppe bzw. von Au und/oder Ag zu den gemäß der elektrochemischen Spannungsreihe unedleren Metallen beträgt zwischen 1:100 bis 100:1.

Der Katalysator kann unter anderem auf die Gasdiffusionsanlage aufgebracht werden. Anschließend kann die mit einer Katalysatorschicht versehene Gasdiffusionslage mit einer Polymermembran verbunden werden, um zu einer erfindungsgemäßen Membran-Elektroden-Einheit zu gelangen.

Hierbei kann die Membran einseitig oder beidseitig mit einer Katalysatorschicht versehen werden. Wird die Membran nur mit einseitig einer Katalysatorschicht versehen, so muß die gegenüberliegende Seite der Membran mit einer Elektrode verpresst werden, die eine Katalysatorschicht aufweist. Falls beide Seiten der Membran mit einer Katalysatorschicht versehen werden sollen, können die nachfolgenden Methoden auch kombiniert angewendet werden, um ein optimales Ergebnis zu erzielen.

In der erfindungsgemäßen Membran-Elektroden-Einheit sind die in der Elektrode enthaltenen Katalysatoren bzw. die an die Gasdiffusionslage angrenzende Katalysatorschicht an der Kathoden- und Anodenseite verschieden.

Der Katalysator kann mit üblichen Verfahren wie Sprühverfahren und Druckverfahren, wie beispielsweise Schablonen- und Siebdruckverfahren, Inkjet-Verfahren, Walzenauftrag, insbesondere Rasterwalzen, Schlitzdüsenauftrag und Rakeln, auf die Membran aufgebracht werden.

Eine erfindungsgemäße Membran-Elektroden-Einheit zeigt eine überraschend hohe Leistungsdichte. Gemäß einer besonderen Ausführungsform leisten bevorzugte Membran-Elektroden-Einheiten eine Stromdichte von mindestens 0,3 A/cm², bevorzugt 0,4 A/cm², besonders bevorzugt 0,5 A/cm². Diese Stromdichte wird im Betrieb mit reinem Wasserstoff an der Anode und Luft (ca. 20 Vol.% Sauerstoff, ca. 80 Vol.% Stickstoff) an der Kathode bei Normaldruck (absolut 1013 mbar, mit offenem Zellausgang) und 0,6V Zellspannung gemessen. Hierbei können besonders hohe Temperaturen im Bereich von 150-200°C, vorzugsweise 160-180°C, insbesondere von 170°C eingesetzt werden.

Die zuvor genannten Leistungsdichten können auch bei geringer Stöchiometrie der Brenngase an beiden Seiten erzielt werden. Gemäß einem besonderen Aspekt der vorliegenden Erfindung ist die Stöchiometrie kleiner oder gleich 2, vorzugsweise kleiner oder gleich 1,5 ganz besonders bevorzugt kleiner oder gleich 1,2.

Gemäß einer besonderen Ausführungsform der vorliegenden Erfindung weist die Katalysatorschicht einen geringen Edelmetallgehalt auf. Der Edelmetall-Gehalt einer bevorzugten Katalysatorschicht, die von einer erfindungsgemäßen Membran umfasst wird, beträgt vorzugsweise höchstens 2 mg/cm², insbesondere höchstens 1 mg/cm², ganz besonders bevorzugt höchstens 0,5 mg/cm². Gemäß einem besonderen Aspekt der vorliegenden Erfindung weist eine Seite einer Membran einen höheren Metallgehalt auf als die gegenüberliegende Seite der Membran. Vorzugsweise ist der Metallgehalt der einen Seite mindestens doppelt so hoch wie der Metallgehalt der gegenüberliegenden Seite.

Für weitere Informationen über Membran-Elektroden-Einheiten wird auf die Fachliteratur, insbesondere auf die Patente US-A-4,191,618, US-A-4,212,714 und US-A-4,333,805 verwiesen. Die in den vorstehend genannten Literaturstellen [US-A-4,191,618, US-A-4,212,714 und US-A-4,333,805] enthaltene Offenbarung hinsichtlich des Aufbaues und der Herstellung von Membran-Elektroden-Einheiten, sowie der zu wählenden Elektroden , Gasdiffusionslagen und Katalysatoren ist auch Bestandteil der Beschreibung.

### Beispiele:

### Beispiel 1

Die PBI Membran wurde wie in DE 10117687 A1 beschrieben hergestellt. Aus der Membran wurden vier 10 cm² große Membranstücke geschnitten. Als Anode und Kathode wurden dabei eine Standard-Elektrode von ETEK mit 1 mg/cm² Pt-Beladung verwendet. Die Membranelektrodeneinheiten wurden mit 1 N/mm² bei 140°C für 30 Sekunden verpresst.

Referenzprobe wurde unbehandelt in die Zelle eingebaut.
Probe 2 wurde 0,5h im Ofen bei 250°C unter Luftatmosphäre konditioniert.
Probe 3 wurde 1 h im Ofen bei 250°C unter Luftatmosphäre konditioniert.
Probe 4 wurde 2h im Ofen bei 250°C unter Luftatmosphäre konditioniert.

Die Membranelektrodeneinheiten wurden bei 0.3 A/cm² eingefahren. Nach einem Tag wurden die E-I Kurven bei 0 und 2 atm aufgenommen. In der Tabelle 1 sind die Ruhepotentiale (OCV) und die Spannungen bei 0.3 bzw. 0.6 A/cm² verglichen.

**Tabelle1:**

| | OCV@0bar | mV@0.3 A/cm² | OCV@2bar | mV@0.6A/cm² |
|---|---|---|---|---|
| Referenz | 871 | 520 | 927 | 624 |
| Probe 1 | 935 | 592 | 961 | 669 |
| Probe 2 | 907 | 575 | 956 | 652 |
| Probe 3 | 989 | 591 | 1014 | 669 |

### Beispiel 2

Die PBI Membran wurde wie in DE 10117687 A1 beschrieben hergestellt und - wie in Beispiel 1 beschrieben - eine Membranelektrodeneinheit (MEA) hergestellt.

Anschließend werden die MEA's bei einer Temperatur von 160°C in einen Ofen gelegt und nach unterschiedlichen Behandlungszeiten aus dem Ofen entfernt. Um die Säurekonzentration zu bestimmen werden die MEAs anschließend titriert. Dabei wird eine Probe aus einer MEA mit einem Stanzeisen des Durchmessers 2.5 cm ausgestanzt und im Anschluß werden die Elektroden von der Membran delaminiert. Die delaminierte Polymermatrix wird in 50mL destiliertem Wasser und 30mL Aceton bei 80°C für 30 Minuten extrahiert. Nach Abkühlung auf Raumtemperatur wird die Lösung und die Probe gemeinsam mit 0.1 M NaOH titriert.

Die Ergebnisse eines Versuches sind in Tabelle 2 dargestellt. In diesem Versuch wurde jeweils von zwei MEAs je zwei Proben genommen und die Konzentration der Phosphorsäure bestimmt. Dabei zeigt sich, daß über die Temperzeit und - temperatur die Phophorsäurekonzentration eingestellt werden kann.

| | Temperature | Time | Phosphoric Acid Concentration in MEA | | Water Concentration in MEA |
|---|---|---|---|---|---|
| | [°C] | [min] | [%]wt | | [%]wt |
| Untreated | --- | 0 | 74 | ±2 | 26 |
| Treated | 160°C | 2 | 83 | ±5 | 17 |
| Treated | 160°C | 10 | 89 | ±2 | 11 |
| Treated | 160°C | 30 | 89 | ±1 | 11 |
| Treated | 160°C | 900 | 89 | ±2 | 11 |
| Treated | 140°C | 10 | 84 | ±3 | 16 |

### Beispiel 3:

In diesem Versuch soll die elektrochemische Leistung von konditionierten MEAs untersucht werden. Die Messungen finden in 50cm² Einzelzellen statt. Auf der Anodenseite wird Wasserstoff mit einer Stöchiometrie von 1.2, auf der Kathodenseite Luft mit einer Stöchiometrie von 2 verwendet. Die Messungen finden bei Umgebungsdruck statt. Nach 100h Betriebszeit bei 0.2A/cm² werden Strom-Spannungs-Kennlinien der Einzelzellen aufgezeichnet. Es werden drei Einzelzellen untersucht die jeweils mit einer unbehandelten MEA, einer für 30min bei 120°C getemperten MEA und einer für 30 min bei 160°C getemperten MEA bestückt werden.

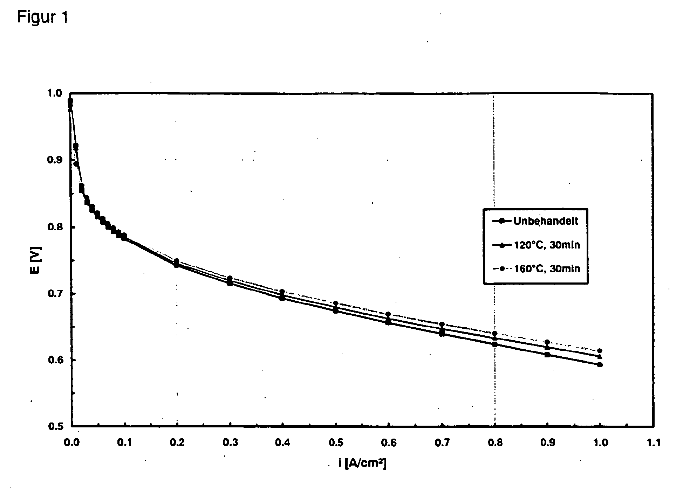

Figur 1 zeigt die Strom-Spannungs-Kennlinien. Es wird deutlich, daß unterschiedlich Temperbedingungen die MEA Leistungen positiv beeinflussen. So ist nach einem Temperschritt bei 160°C und 30min die gemessene Zellspannung bei 0.5A/cm² um 12 mV höher als bei einer unbehandelten MEA. Nach einem Temperschritt bei 120°C und 30min ist Zellspannung bei 0.5A/cm² um 5mV höher verglichen mit einer unbehandelten MEA.

## Patentansprüche

1. Verfahren zur Konditionierung einer Membran-Elektroden-Einheit wobei eine Membran-Elektroden-Einheit enthaltend
A) mindestens eine membranförmige Polymerelektrolyt-Matrix enthaltend mindestens eine Sauerstoffsäure des Phosphors und/oder Schwefels und mindestens ein Polymer mit mindestens einem Heteroatom ausgewählt aus der Gruppe Stickstoff, Sauerstoff und/oder Schwefel, und
B) mindestens zwei Elektroden,
nach der Laminierung der Polymerelektrolyt-Matrix und der Elektroden zu einer Membran-Elektroden-Einheit in einem Temperaturbereich von 60°C bis 300°C konditioniert wird.

2. Verfahren gemäß Anspruch 1, **dadurch gekennzeichnet, dass** die Konditionierung bei Temperaturen von 80°C bis 300°C, insbesondere von 100°C bis 290°C, besonders bevorzugt von 110°C bis 280°C, ganz besonders bevorzugt von 140°C bis 275°C, erfolgt.

3. Verfahren gemäß Anspruch 1, **dadurch gekennzeichnet, dass** die Mindestdauer der Konditionierung mindestens 30 Sekunden, vorzugsweise mindestens 1 Minute, insbesondere mindestens 2 Minuten, beträgt.

4. Verfahren gemäß Anspruch 1, **dadurch gekennzeichnet, dass** die Membran-Elektroden-Einheit während der Konditionierung in einer Brennstoffzellen-Einzelzelle oder in einem Brennstoffzellen-Stapel (Stack) erfolgt.

5. Verfahren gemäß Anspruch 4, **dadurch gekennzeichnet, dass** zumindest während der Konditionierung mindestens einem gasförmigen Medium gespült wird.

6. Verfahren gemäß Anspruch 5, **dadurch gekennzeichnet, dass** als gasförmiges Medium Luft, Sauerstoff, Stickstoff und/oder Edelgase eingesetzt werden.

7. Verfahren gemäß Anspruch 5, **dadurch gekennzeichnet, dass** die als gasförmiges Medium eingesetzten Medien kein Wasserstoffgas enthalten oder unter den gewählten Bedingungen entwickeln.

8. Verfahren gemäß Anspruch 4, **dadurch gekennzeichnet, dass** die Konditionierung unter im wesentlichen stromlosen Bedingungen erfolgt.

9. Verfahren gemäß Anspruch 1, **dadurch gekennzeichnet, dass** die Polymerelektrolyt-Matrix, welche wiederum mindestens ein Polymer mit mindestens einem Heteroatom ausgewählt aus der Gruppe Stickstoff, Sauerstoff und/oder Schwefel enthält, ein basisches Polymer ist.

10. Verfahren gemäß Anspruch 9, **dadurch gekennzeichnet, dass** das basische Polymer ein Polymer ist, welches mindestens ein Stickstoffatom umfasst.

11. Verfahren gemäß Anspruch 9, **dadurch gekennzeichnet, dass** das basische Polymer ein Polyphosphazen, Polyimin, Polyisocyanid, Polyetherimin, Polyanilin, Polyamid, Polyhydrazid, Polyurethan, Polyimid, Polyazol und/oder Polyazine ist.

12. Verfahren gemäß Anspruch 9, **dadurch gekennzeichnet, dass** das basische Polymer ein Polymer auf Basis von Polyazol ist, welches die wiederkehrenden Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVII) und/oder (XVIII) und/oder (XIX) und/oder (XX) und/oder (XXI) und/oder (XXII) 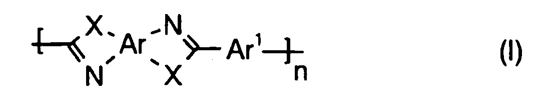 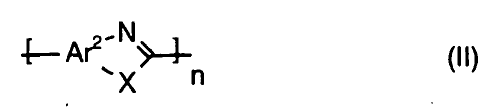 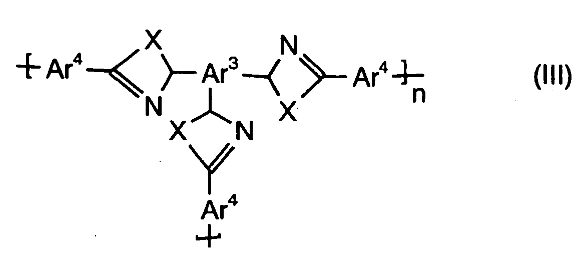 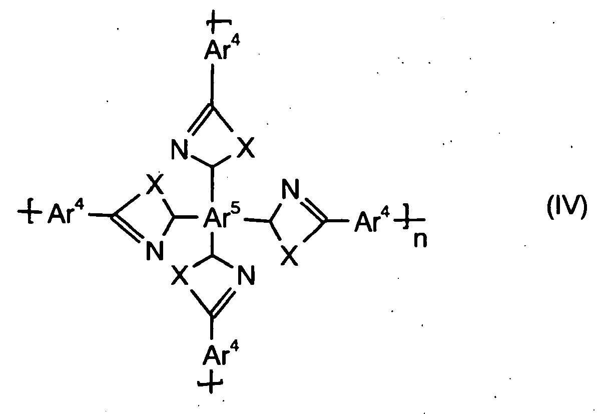 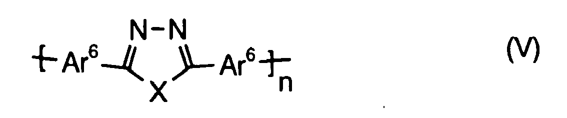 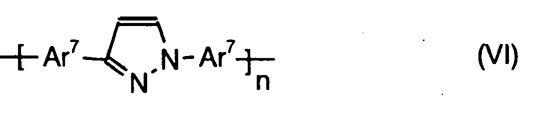 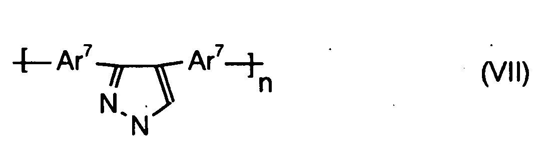 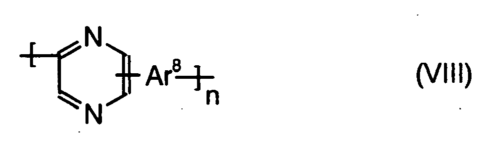 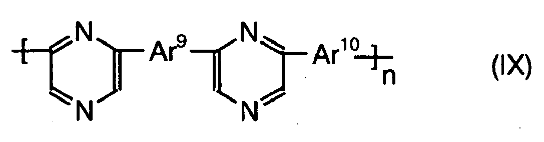 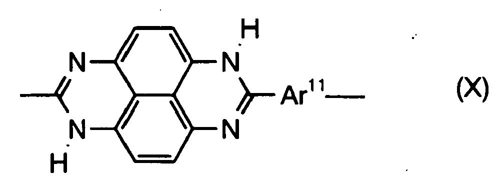 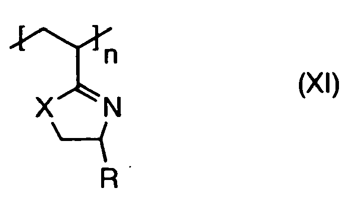 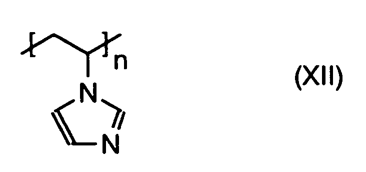 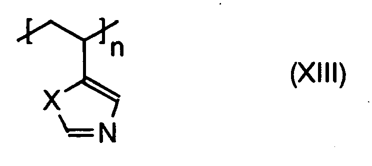 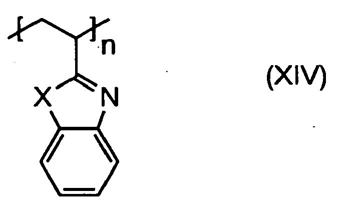 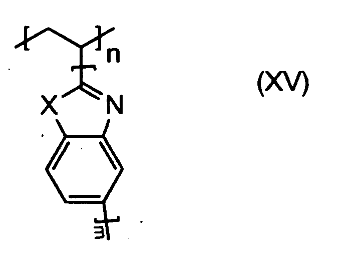 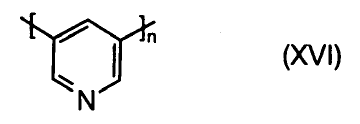 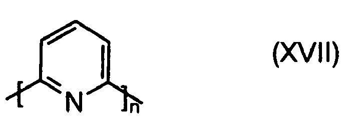 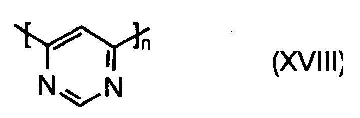 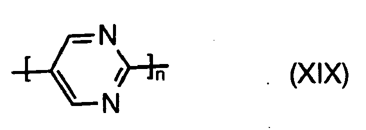 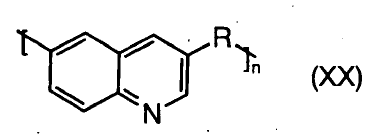 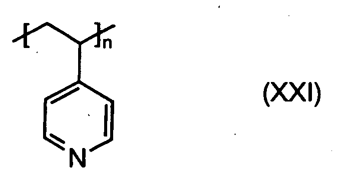 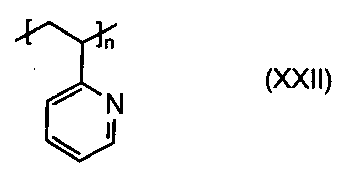 worin
Ar gleich oder verschieden sind und für eine vierbindige aromatische oder heteroaromatische Gruppe, die ein- oder mehrkernig sein kann,
Ar¹ gleich oder verschieden sind und für eine zweibindige aromatische oder heteroaromatische Gruppe, die ein- oder mehrkernig sein kann,
Ar² gleich oder verschieden sind und für eine zwei oder dreibindige aromatische oder heteroaromatische Gruppe, die ein- oder mehrkernig sein kann,
Ar³ gleich oder verschieden sind und für eine dreibindige aromatische oder heteroaromatische Gruppe, die ein- oder mehrkernig sein kann,
Ar⁴ gleich oder verschieden sind und für eine dreibindige aromatische oder heteroaromatische Gruppe, die ein- oder mehrkernig sein kann,
Ar⁵ gleich oder verschieden sind und für eine vierbindige aromatische oder heteroaromatische Gruppe, die ein- oder mehrkernig sein kann,
Ar⁶ gleich oder verschieden sind und für eine zweibindige aromatische oder heteroaromatische Gruppe, die ein- oder mehrkernig sein kann,
Ar⁷ gleich oder verschieden sind und für eine zweibindige aromatische oder heteroaromatische Gruppe, die ein- oder mehrkernig sein kann,
Ar⁸ gleich oder verschieden sind und für eine dreibindige aromatische oder heteroaromatische Gruppe, die ein- oder mehrkernig sein kann,
Ar⁹ gleich oder verschieden sind und für eine zwei- oder drei- oder vierbindige aromatische oder heteroaromatische Gruppe, die ein- oder mehrkernig sein kann,
Ar¹⁰ gleich oder verschieden sind und für eine zwei- oder dreibindige aromatische oder heteroaromatische Gruppe, die ein- oder mehrkernig sein kann,
Ar¹¹ gleich oder verschieden sind und für eine zweibindige aromatische oder heteroaromatische Gruppe, die ein- oder mehrkernig sein kann,
X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
R gleich oder verschieden für Wasserstoff, eine Alkylgruppe und eine aromatische Gruppe steht, mit der Maßgabe das R in der Formel (XX) nicht für Wasserstoff steht und
n, m eine ganze Zahl größer gleich 10, bevorzugt größer gleich 100 ist, enthält.

13. Verfahren gemäß Anspruch 12, **dadurch gekennzeichnet, dass** das Polymer ein Copolymer oder ein Blend, das mindestens zwei Einheiten der Formel (I) bis (XXII) enthält, die sich voneinander unterscheiden.

14. Verfahren gemäß Anspruch 13, **dadurch gekennzeichnet, dass** die Polymere können als Blockcopolymere (Diblock, Triblock), statistische Copolymere, periodische Copolymere und/oder alternierende Polymere vorliegen.

15. Verfahren gemäß Anspruch 1, **dadurch gekennzeichnet, dass** die Polymerelektrolyt-Matrix zusätzlich ein weiteres Polymer enthält.

16. Verfahren gemäß Anspruch 15, **dadurch gekennzeichnet, dass** als weiteres Polymer Polysulfone, Polyethersulfone, Polyarylketone, Polyetherketone, Polyetherketonketone, Polyetheretherketone, Polyetheretherketonketone und/oder mit Sulfonsäuregruppen tragende aromatische Polymere, sowie Mischungen derselben eingesetzt werden.

17. Verfahren gemäß Anspruch 1, **dadurch gekennzeichnet, dass** die zu konditionierende Membran-Elektroden-Einheit in einem Brennstoffzellensystem oder einem Brennstoffzellen-Stapel (Stack) enthalten ist.

18. Membran-Elektroden-Einheit, erhältlich analog Anspruch 1, enthaltend
A) mindestens eine membranförmige Polymerelektrolyt-Matrix enthaltend mindestens eine Sauerstoffsäure des Phosphors und/oder Schwefels und mindestens ein Polymer mit mindestens einem Heteroatom ausgewählt aus der Gruppe Stickstoff, Sauerstoff und/oder Schwefel, und
B) mindestens zwei Elektroden,
**dadurch gekennzeichnet, dass** der Wassergehalt der Polymerelektrolyt-Matrix 20 Gew.% oder weniger beträgt.

19. Brennstoffzelle, enthaltend eine Membran-Elektroden-Einheit gemäß Anspruch 18.

## Claims

1. A method for conditioning a membrane electrode assembly wherein a membrane electrode assembly containing
A) at least one polymer electrolyte matrix in the form of a membrane containing at least one oxo acid of phosphorus and/or sulphur and at least one polymer with at least one heteroatom selected from the group of nitrogen, oxygen and/or sulphur,
B) at least two electrodes,
is conditioned after the lamination of the polymer electrolyte matrix and the electrodes to a membrane electrode assembly in a temperature range of 60°C to 300°C.

2. The method according to claim 1, **characterized in that** the conditioning is performed at temperatures of 80°C to 300°C, in particular 100°C to 290°C, particularly preferably 110°C to 280°C, very particularly preferably 140°C to 275°C.

3. The method according to claim 1, **characterized in that** the minimum duration of the conditioning is at least 30 seconds, preferably at least 1 minute, in particular at least 2 minutes.

4. The method according to claim 1, **characterized in that** the conditioning of the membrane electrode assembly is performed in an individual fuel cell or in a fuel cell stack.

5. The method according to claim 4, **characterized in that** flushing with at least one gaseous medium takes place at least during the conditioning.

6. The method according to claim 5, **characterized in that** air, oxygen, nitrogen and/or noble gases are used as the gaseous medium.

7. The method according to claim 5, **characterized in that** the media used as the gaseous medium contain no hydrogen gas or develop no hydrogen gas under the chosen conditions.

8. The method according to claim 4, **characterized in that** the conditioning is performed under substantially currentless conditions.

9. The method according to claim 1, **characterized in that** the polymer electrolyte matrix is an alkaline polymer and in turn contains at least one polymer with at least one heteroatom selected from the group of nitrogen, oxygen and/or sulphur.

10. The method according to claim 9, **characterized in that** the alkaline polymer is a polymer, which comprises at least one nitrogen atom.

11. The method according to claim 9, **characterized in that** the alkaline polymer is a polyphosphazene, polyimine, polyisocyanide, polyetherimine, polyaniline, polyamide, polyhydrazide, polyurethane, polyimide, polyazole and/or polyazine.

12. The method according to claim 9, **characterized in that** the alkaline polymer is a polymer based on polyazole, which contains the recurring azole units of the general formula (I) and/or (II) and/or (III) and/or (IV) and/or (V) and/or (VI) and/or (VII) and/or (VIII) and/or (IX) and/or (X) and/or (XI) and/or (XII) and/or (XIII) and/or (XIV) and/or (XV) and/or (XVI) and/or (XVII) and/or (XVIII) and/or (XIX) and/or (XX) and/or (XXI) and/or (XXII) 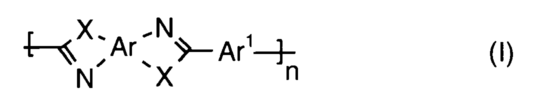 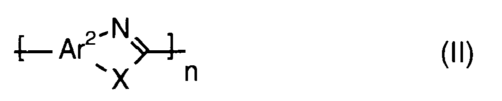 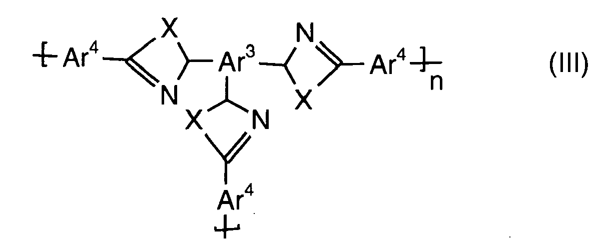 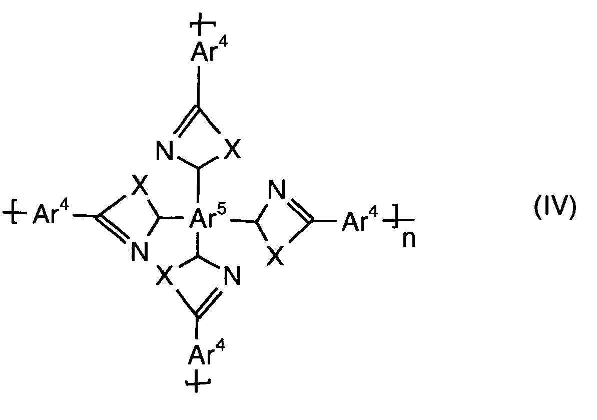 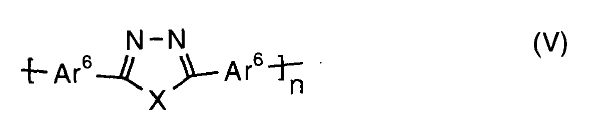 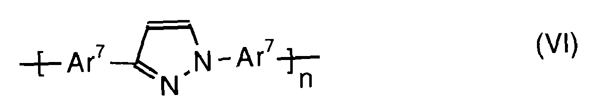 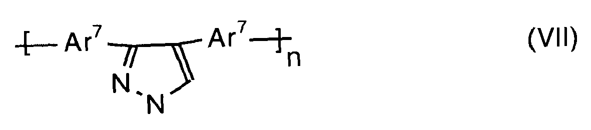 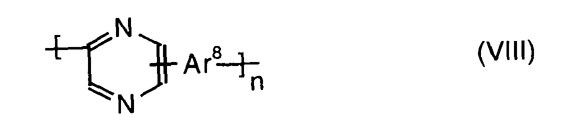 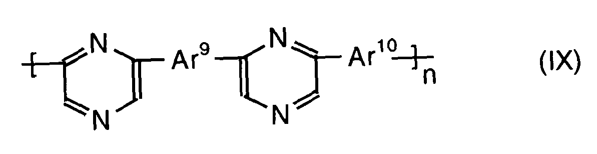 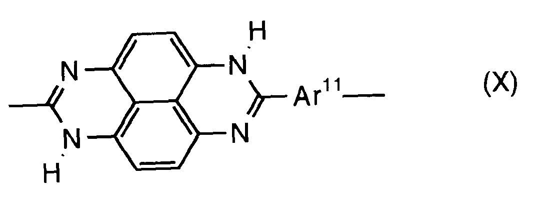 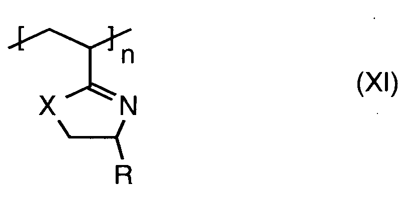 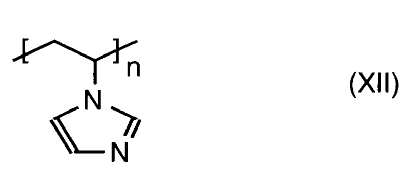 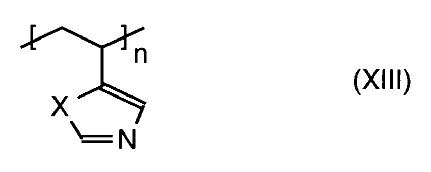 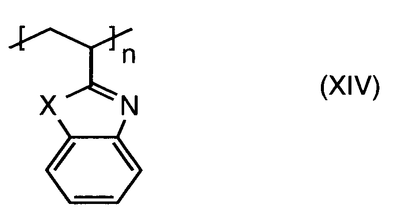 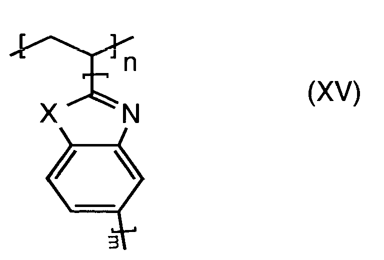 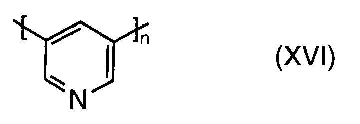 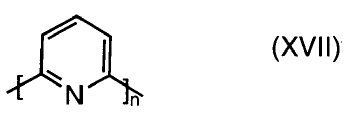 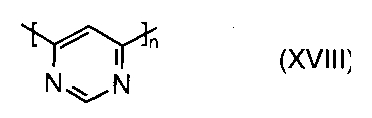 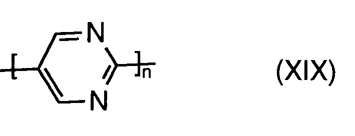 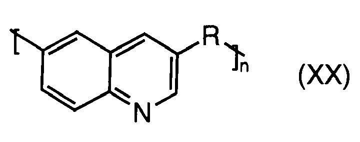 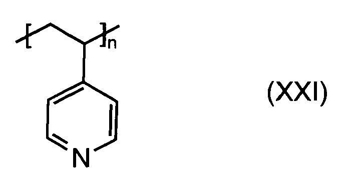 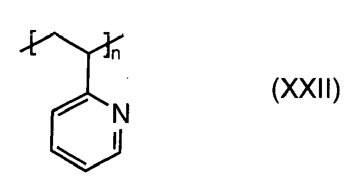 wherein
Ar are the same or different and are each a tetravalent aromatic or het- eroaromatic group which may be mononuclear or polynuclear,
Ar¹ are the same or different and are each a divalent aromatic or het- eroaromatic group which may be mononuclear or polynuclear,
Ar² are the same or different and are each a divalent or trivalent aromatic or heteroaromatic group which may be mononuclear or polynuclear,
Ar³ are the same or different and are each a trivalent aromatic or het- eroaromatic group which may be mononuclear or polynuclear,
Ar⁴ are the same or different and are each a trivalent aromatic or het- eroaromatic group which may be mononuclear or polynuclear,
Ar⁵ are the same or different and are each a tetravalent aromatic or het- eroaromatic group which may be mononuclear or polynuclear,
Ar⁶ are the same or different and are each a divalent aromatic or het- eroaromatic group which may be mononuclear or polynuclear,
Ar⁷ are the same or different and are each a divalent aromatic or het- eroaromatic group which may be mononuclear or polynuclear,
Ar⁸ are the same or different and are each a trivalent aromatic or het- eroaromatic group which may be mononuclear or polynuclear,
Ar⁹ are the same or different and are each a divalent or trivalent or tetrava- lent aromatic or heteroaromatic group which may be mononuclear or polynuclear,
Ar¹⁰ are the same or different and are each a divalent or trivalent aromatic or heteroaromatic group which may be mononuclear or polynuclear,
Ar¹¹ are the same or different and are each a divalent aromatic or het- eroaromatic group which may be mononuclear or polynuclear,
X are the same or different and are each oxygen, sulphur or an amino group which bears a hydrogen atom, a group having 1-20 carbon at- oms, preferably a branched or unbranched alkyl or alkoxy group, or an aryl group as further radical,
R are identical or different and represent hydrogen, an alkyl group and an aromatic group, with the proviso that R in the formula (XX) is not hydro- gen, and
n, m are each an integer greater than or equal to 10, preferably greater or equal to 100.

13. The method according to claim 12, **characterized in that** the polymer is a copolymer or a blend which contains at least two units of the formulae (I) to (XXII) which differ from one another.

14. The method according to claim 13, **characterized in that** the polymers can be in the form of block copolymers (diblock, triblock), random copolymers, periodic copolymers and/or alternating polymers.

15. The method according to claim 1, **characterized in that** the polymer electrolyte matrix additionally contains a further polymer.

16. The method according to claim 15, **characterized in that** polysulphones, polyethersulphones, polyaryl ketones, polyether ketones, polyether ketone ketones, polyether ether ketones, polyether ether ketone ketones and/or aromatic polymers carrying sulphonic acid groups as well as mixtures thereof are used as the further polymer.

17. The method according to claim 1, **characterized in that** the membrane electrode assembly to be conditioned is contained in a fuel cell system or a fuel cell stack.

18. A membrane electrode assembly obtainable according to claim 1 containing
A) at least one polymer electrolyte matrix in the form of a membrane containing at least one oxo acid of phosphorus and/or sulphur and at least one polymer with at least one heteroatom selected from the group of nitrogen, oxygen and/or sulphur,
B) at least two electrodes,
**characterized in that** the water content of the polymer electrolyte matrix is 20% by weight or less.

19. A fuel cell, containing a membrane electrode assembly according to claim 18.

## Revendications

1. Procédé pour le conditionnement d'une unité d'électrode de membrane sa-chant qu'une unité d'électrode de membrane comprenant
A) au moins une matrice électrolyte polymère sous forme de membrane contenant au moins un oxyacide du phosphore et/ou du soufre et au moins un polymère avec au moins un hétéroatome choisi dans le groupe azote, oxygène et/ou soufre, et
B) au moins deux électrodes, est conditionnée après laminage de la matrice électrolyte polymère et des électrodes en une unité d'électrode de membrane dans une plage de température comprise entre 60° et 300°C.

2. Procédé selon revendication 1, **caractérisé en ce que** le conditionnement s'effectue à des températures comprises entre 80°C et 300°C, notamment entre 100°C et 290°C, de manière préférée entre 110°C et 280°C et de manière particulièrement préférée entre 140°C et 275°C.

3. Procédé selon revendication 1, **caractérisé en ce que** la durée minimum du conditionnement est d'au moins 30 secondes, de préférence au moins une minute, notamment au moins 2 minutes.

4. Procédé selon revendication 1, **caractérisé en ce que** l'unité d'électrode de membrane s'effectue pendant le conditionnement dans une cellule individuelle de pile à combustible ou dans un empilement de piles à combustible (stack).

5. Procédé selon revendication 4, **caractérisé en ce qu'**au moins pendant le conditionnement, au moins un milieu gazeux est lavé.

6. Procédé selon revendication 5, **caractérisé en ce qu'**en tant que milieu gazeux, on utilise de l'air, de l'oxygène, de l'azote et/ou des gaz rares.

7. Procédé selon revendication 5, **caractérisé en ce que** les milieux utilisés en tant que milieu gazeux ne contiennent pas de gaz hydrogène ou se développent dans les conditions choisies.

8. Procédé selon revendication 4, **caractérisé en ce que** le conditionnement s'effectue dans des conditions essentiellement sans courant.

9. Procédé selon revendication 1, **caractérisé en ce que** la matrice électrolyte polymère, qui par contre contient au moins un polymère avec au moins un hétéroataome choisi dans le groupe azote, oxygène et/ou soufre, est un polymère basique.

10. Procédé selon revendication 9, **caractérisé en ce que** le polymère basique est un polymère qui comprend au moins un atome d'azote.

11. Procédé selon revendication 9, **caractérisé en ce que** le polymère basique est un polyphsphazène, polyimine, polyosicyanure, polyetherimine, polyaniline, polyamide, polyhydrazide, polyuréthane, polyimide, polyazole et/ou polyazine.

12. Procédé selon revendication 9, **caractérisé en ce que**, le polymère basique est un polymère à base de polyazole, qui contient des unités d'azole récurrentes de la formule générale (I) et/ou (II) et/ou (III) et/ou (IV) et/ou (V) et/ou (VI) et/ou (VII) et/ou (VIII) et/ou (IX) et/ou (X) et/ou (XI) et/ou (XII) et/ou (XIII) et/ou (XIV) et/ou (XV) et/ou (XVI) et/ou (XVII) et/ou (XVIII) et/ou (XIX) et/ou (XX) et/ou (XXI) et/ou (XXII) 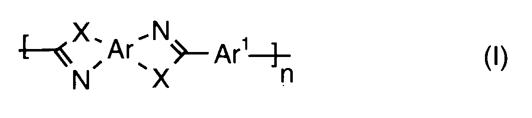 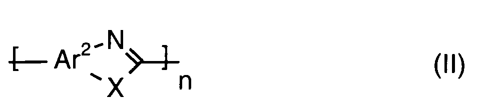 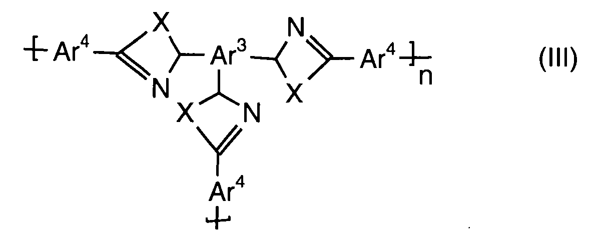 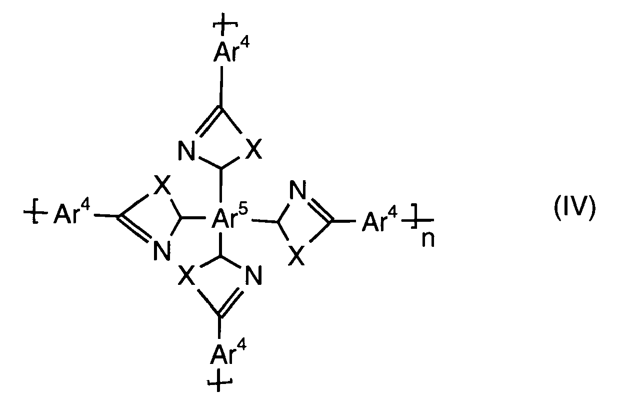 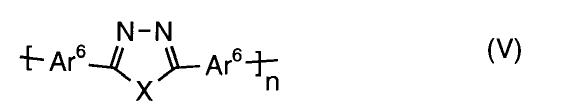 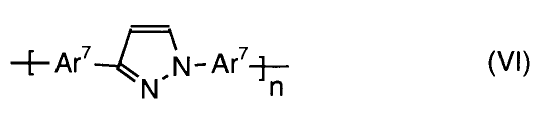 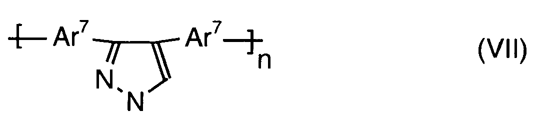 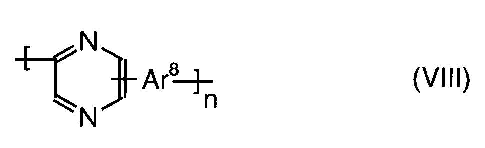 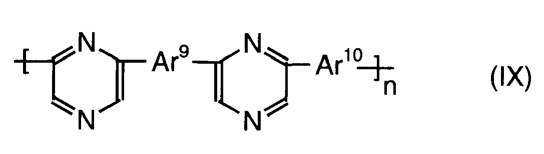 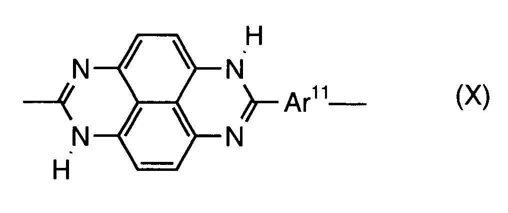 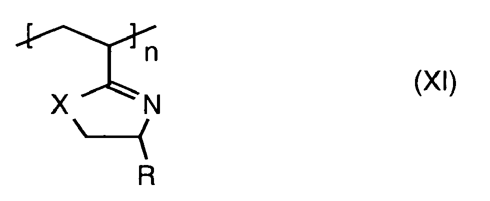 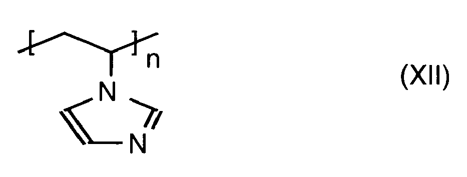 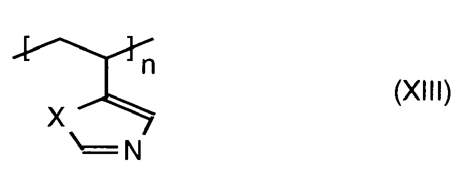 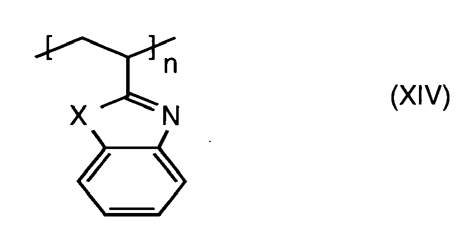 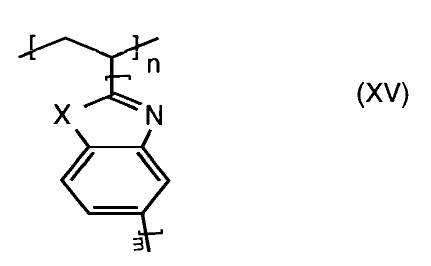 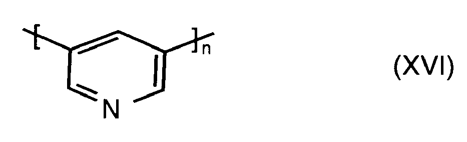 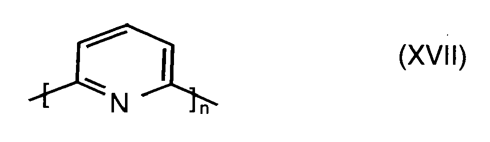 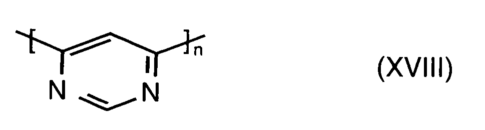 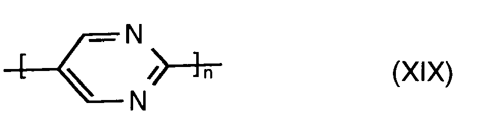 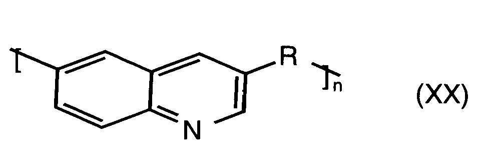 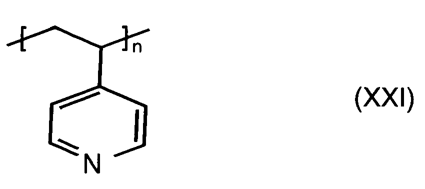 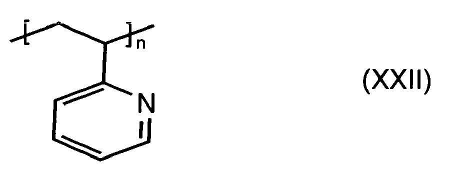 dans lesquelles
Ar sont identiques ou différents et désigne un groupe aromatique ou hété- roaromatique à quatre liaisons qui peut être à un ou plusieurs noyaux,
Ar¹ sont identiques ou différents et désigne un groupe aromatique ou hété- roaromatique à deux liaisons qui peut être à un ou plusieurs noyaux,
Ar² sont identiques ou différents et désigne un groupe aromatique ou hété- roaromatique à deux ou trois liaisons qui peut être à un ou plusieurs noyaux,
Ar³ sont identiques ou différents et désigne un groupe aromatique ou hété- roaromatique à trois liaisons qui peut être à un ou plusieurs noyaux,
Ar⁴ sont identiques ou différents et désigne un groupe aromatique ou hété- roaromatique à trois liaisons qui peut être à un ou plusieurs noyaux,
Ar⁵ sont identiques ou différents et désigne un groupe aromatique ou hété- roaromatique à quatre liaisons qui peut être à un ou plusieurs noyaux,
Ar⁶ sont identiques ou différents et désigne un groupe aromatique ou hété- roaromatique à deux liaisons qui peut être à un ou plusieurs noyaux,
Ar⁷ sont identiques ou différents et désigne un groupe aromatique ou hété- roaromatique à deux liaisons qui peut être à un ou plusieurs noyaux,
Ar⁸ sont identiques ou différents et désigne un groupe aromatique ou hété- roaromatique à trois liaisons qui peut être à un ou plusieurs noyaux,
Ar⁹ sont identiques ou différents et désigne un groupe aromatique ou hété- roaromatique à deux, trois, ou quatre liaisons qui peut être à un ou plu- sieurs noyaux,
Ar¹⁰ sont identiques ou différents et désigne un groupe aromatique ou hété- roaromatique à deux ou trois liaisons qui peut être à un ou plusieurs noyaux,
Ar¹¹ sont identiques ou différents et désigne un groupe aromatique ou hété- roaromatique à deux liaisons qui peut être à un ou plusieurs noyaux,
X est identique ou différent et désigne l'oxygène, le souffre ou un groupe aminé, qui porte un atome d'hydrogène, un groupe présentant un atome de carbone 1-20, de préférence un groupe alkyle ou alkoxy ramifié ou non ramifié ou un groupe aryle en tant qu'autre radical.
R est identique ou différent, désigne l'hydrogène, un groupe alkyle et un groupe aromatique, étant donné que R dans la formule (XX) ne désigne pas l'hydrogène et
n, m est un nombre entier supérieur ou égal à 10 de préférence supérieur ou égal à 100.

13. Procédé selon revendication 12, **caractérisé en ce que** le polymère est un copolymère ou un mélange qui comprend au moins deux unités de la formule (I) à (XXII), qui sont différentes les unes des autres.

14. Procédé selon revendication 13, **caractérisé en ce que** les polymères peuvent être présents en tant que copolymères blocs (dibloc, tribloc), copolymères statistiques, copolymères périodiques et/ou polymères alternants.

15. Procédé selon revendication 1, **caractérisé en ce que** la matrice électrolyte polymère contient en plus un autre polymère.

16. Procédé selon revendication 15, **caractérisé en ce qu'**en tant qu'autre polymère, on utilise du polysulfone, polyéthersulfone, polyaryle cétone, polyéther cétone, polyéther cétone cétone, polyéther éther cétone, polyéther éther cétone cétone et/ou de polymères aromatiques portant avant des groupes d'acide sulfonique, et des mélanges de ceux-ci.

17. Procédé selon revendication 1, **caractérisé en ce que** l'unité d'électrode de membrane à conditionner est contenue dans un système de pile à combustible ou un empilement de piles à combustible (stack).

18. Unité d'électrode de membrane comprenant
A) au moins une matrice électrolyte polymère sous forme de membrane contenant au moins un oxyacide du phosphore et/ou du soufre et au moins un polymère avec au moins un hétéroatome choisi dans le groupe azote, oxygène et/ou soufre, et
B) au moins deux électrodes,
**caractérisée en ce que** la teneur en eau de la matrice électrolyte polymère est de 20 % en poids ou moins.

19. Pile à combustible comprenant une unité d'électrode à membrane selon revendication 18.
